# EUROPEAN PATENT SPECIFICATION

(11) **EP 3 988 830 B1**
(45) Date of publication and mention of the grant of the patent: **13.09.2023**
(21) Application number: 20835021.5
(22) Date of filing: 29.06.2020
(51) Int. Cl.: F16L 17/04

(54) **PIPELINE CONNECTING DEVICE AND COUPLING METHOD**
ROHRLEITUNGSVERBINDUNG UND KUPPLUNGSVERFAHREN
DISPOSITIF DE RACCORDEMENT DE TUYAU ET PROCÉDÉ D'ACCOUPLEMENT

(30) Priority: 29.06.2019 CN 201910581107; 27.04.2020 CN 202010345015
(43) Date of publication of application: 27.04.2022
(73) Proprietor: Shanghai Vision Mechanical Joint Co., Ltd., Shanghai 201807 (CN)
(72) Inventor: LU, Zhigang, Shanghai 201807 (CN); ZHAI, Zhibing, Shanghai 201807 (CN)
(74) Representative: Novagraaf International SA
(86) International application number: PCT/CN2020/098869
(87) International publication number: WO 2021/000834

(56) References cited:
- EP-A1- 2 112 414
- WO-A2-2007/145995
- CN-A- 109 442 108
- US-A- 4 915 418
- US-A1- 2012 256 415
- US-A1- 2013 185 919
- US-A1- 2018 163 906

## Description

### BACKGROUND OF THE PRESENT INVENTION

### FIELD OF INVENTION

The present invention relates to a coupling device for pipeline elements, and more particularly to a pipeline connecting device, wherein the pipeline connecting device facilitates an easy and fast installation with the pipeline elements.

### DESCRIPTION OF RELATED ARTS

A pipeline connecting device is generally used for coupling two pipeline elements which can be but not limited to two pipes, a pipe and a pipe fitting such as an elbow, a valve, a reducer and a tee, two pipe fittings, a pipe and a device with a pipe-like component, two devices with pipe-like components, and etc.

In order for installation of the pipeline elements with the pipeline connecting device, each of the pipeline elements is formed with a groove end portion having an indented groove adjacent to a coupling end portion thereof for coupling with an engaging key of the pipe coupler. The coupling end portion of the groove end portion of each of the pipeline elements is generally formed into an enlarged portion having an increased diameter.

A conventional pipeline connecting device typically includes two metal housings, a gasket adapted for being received in the metal housings and a plurality of fasteners such as bolt and nut fasteners for firmly fastening the metal housings with each other. Accordingly, the two metal housings are formed with the engaging keys which are adapted for engaging with the grooves of the pipeline elements.

In order to ensure the stability of the engagement between the engaging keys and the grooves, an engaging surface of each of the engaging keys of the conventional pipeline connecting device is formed into a circular engaging surface each having a diameter matching with a diameter of a groove circumference at the bottom of the corresponding groove of the pipeline element.

Actually, before installation, the two housings should be in an open state that they are not engaged with each to form an inner cavity, and during the installing process, the gasket is mounted on the pipeline elements and then the two housings in the open state are mounted on the pipeline element in such a manner that the engaging keys are received in the corresponding grooves of the pipeline elements, and finally the fasteners are mounted on the metal housings to fasten the two metal housings.

It is thus can be seen that the components of the conventional pipeline connecting device should be disassembled before the installation, so that the installing process is time-consuming and effort-consuming that it is not suitable for convenient and fast installation of the pipeline connecting device with the pipeline elements, and the cost is also relatively high.

In the prior art, there are known some methods or devices as described below in their respective documents.

The patent application EP2112414A1 discloses an improved housing-shaped pipe joint improved and able to augment the quality by avoiding the chattering between the housing and the annular groove and increasing the rigidity of the connection between the pipes irrespective of the groove-forming way being rolling or cutting.

The patent application US 4915418A discloses an improved pipe coupling of the type which is formed of arcuate segments that provide a circular housing which encircle and connect pipes together.

The patent application US 20180163906A1 discloses a pipe system, which includes a first pipe element, a second pipe element, and a pipe coupling. The pipe coupling connects an end of the second pipe element to an end of the first pipe element, the pipe coupling including a coupling segment having an inner surface defining a ring groove proximate to a first axial end of the pipe coupling, and a pipe connection ring positioned in the ring groove and engaged with the first pipe element, the pipe connection ring being a closed ring.

The patent application CN 109442108A discloses a quick connection hoop, which comprises a semi-ring upper hoop body and a semi-ring lower hoop body. The inner ring surface of the upper hoop body is provided with upper convex ribs and an upper sealing ring groove. The inner ring surface of the lower hoop body is provided with lower convex ribs and a lower sealing ring groove. One end of the upper hoop body and one end of the lower hoop body serve as the plug-in ends, and the other end of the upper hoop body and the other end of the lower hoop body serve as the connecting ends. The connecting ends of the upper hoop body and the lower hoop body are both provided with convex lugs. The connecting ends of the upper hoop body and the lower hoop body are connected together through bolts penetrating through the convex lugs. The plug-in ends of the upper hoop body and the lower hoop body are connected together through plug-in mechanisms arranged at the plug-in ends of the upper hoop body and the lower hoop body. The upper hoop body and the lower hoop body are connected end to end to define a central space used for containing a pipeline, and sealing rings mounted in the upper sealing ring groove and the lower sealing ring groove are arranged in the internal space.

The patent application WO2007145995A2 discloses a pipe coupling for joining pipe elements end-to-end. The pipe coupling is formed of segments attached to one another circumferentially straddling the pipe elements. The segments are formed from sub-sections connected to one another end-to-end. Each sub-section has a surface region disposed to engage the outer surfaces of the pipe elements. Each surface region has a different radius of curvature from a surface region on a neighboring sub-section. The radii are selected so that when the coupling segments are deformed around the pipe elements, portions of surface regions of selected sub-sections contact the pipe elements, while portions of surface regions of those sub-sections between the selected portions remain in spaced relation away from the pipe elements. A constant and minimal torque is required to bolt the segments together as a result.

The patent application US2013185919A1 discloses a coupling, which includes an annular gasket, the annular gasket including at least one sealing surface directed radially inwardly and an outer surface directed radially outwardly; at least one segment, each segment being approximately semi-circular and including at least one inner surface, at least one outer surface, and at least two ends, each segment including a fastener pad protruding proximate to each end, each fastener pad defining a fastener hole, each end including at least one of a tongue and a groove, each tongue protruding circumferentially from at least one end, each groove defined circumferentially in at least one end; and at least one fastener, wherein at least one portion of a shaft portion of the fastener is sized to engage at least one fastener hole in at least one segment.

The patent application US2012256415A1 discloses a coupling for securing pipe elements together in end-to-end relation, which has segments joined at one end by a pivot attachment and at an opposite end by an adjustable connection member. The segments surround a central space which receives the pipe elements. A gripping body is captured between the segments. The segments have angularly oriented reaction surfaces. The gripping body has angularly oriented contact surfaces which interface with the reaction surfaces. When the segments are drawn toward each other by the connection members, interaction between the reaction surfaces and the contact surfaces forces the gripping body radially inwardly. Inwardly facing arcuate surfaces on the segments and the gripping body engage and retain the pipe elements.

### SUMMARY OF THE PRESENT INVENTION

The invention is advantageous in that it provides a pipeline element coupling piece and coupling method thereof, wherein the pipeline connecting device can be installed on two pipeline elements without requiring disassembling components such as a gasket and a fastener for reducing installing steps as well as saving installing time, so as to achieve a quick installation.

The above-mentioned objectives are solved with the features of independent claims. Further embodiments are defined in the dependent claims.

Another advantage of the invention is to provide a pipeline element coupling piece and coupling method thereof, wherein the pipeline connecting device with preassembled components can be directly pushed to be sleeved on the enlarged coupling end portions of the pipeline elements during installation

Another advantage of the invention is to provide a pipeline element coupling piece j and coupling method thereof, wherein when the pipeline connecting device is directly preassembled on the pipeline elements, only a step of operating on the fastener for fastening the coupling units with each other is required, so as to facilitate the installation process.

Another advantage of the invention is to provide a pipeline element coupling piece and coupling method thereof, wherein the coupling units with the engaging keys are manufactured in a foundry, no additional tools are required for increasing a radius of curvature of each of the engaging keys.

Another advantage of the invention is to provide a pipeline element coupling piece and coupling method thereof, wherein each of the engaging keys has an engaging surface that has varying radiuses of curvature rather than a fixed radius of curvature, during installation, each engaging surface with the varying radiuses is deformed to form a substantially round curvature that a part of or all of the engaging surface is attached to a groove circumference at a bottom of a groove of the corresponding pipeline element, so as to achieve a firmly and reliable coupling performance.

Another advantage of the invention is to provide a pipeline element coupling piece and coupling method thereof, wherein the smallest radius of curvature at a position of the engaging surface of each of the engaging keys is substantially the same as a radius of curvature of the groove circumference of the corresponding pipeline element, i.e. the smallest radius of curvature at the position of the engaging surface of each of the engaging keys is slightly larger than or equal to the radius of curvature of the groove circumference of the corresponding pipeline element, while positions of the engaging surface of each of the engaging keys having a larger radius of curvature is deformed for engaging with the groove circumference during installation of the pipeline connecting device, so as to ensure the stable coupling performance.

Another advantage of the invention is to provide a pipeline element coupling piece and coupling method thereof, wherein when the engaging surface has two or more engaging sections having different curves of varying radiuses of curvature, the two curves have a same radius of curvature at transition points therebetween, so as to ensure the reliability of the coupling performance.

Another advantage of the invention is to provide a pipeline element coupling piece and coupling method thereof, wherein when the pipeline connecting device is preassembled on the pipeline elements, a gap is formed between each of the engaging surfaces of the pipeline connecting device and the corresponding groove circumference of each of the pipeline elements, and the gap is then reduced by deforming the engaging surface until a part of or all of the engaging surface is attached to the groove circumference of the corresponding pipeline element.

Another advantage of the invention is to provide a pipeline element coupling piece and coupling method thereof, wherein the pipeline connecting device does not require to detach the gasket and the fastening element before installing to an outer side of the pipeline element, that reduces the steps of installation and save the installation time, so as to achieve quick installation.

Another advantage of the invention is to provide a pipeline element coupling piece and coupling method thereof, wherein the pipeline connecting device is capable of directly installing to an outer side of the pipeline element at a pipe end portion of the pipeline element, so as to speed up the installation.

Another advantage of the invention is to provide a pipeline element coupling piece and coupling method thereof, wherein the coupling units, the fastening element and the gasket have no need to disassemble and separate, wherein the coupling units and the gasket are able to be install at the outer side of the pipeline element together, that not only increases the installation speed, but also avoids disposition between the coupling units and the gasket so as to lower the technical requirement for manual assembling.

Another advantage of the invention is to provide a pipeline element coupling piece and coupling method thereof, wherein the pipeline connecting device includes at least one fastening element for fastening between the coupling units, such that, during installation, the fastening element has no need to disassemble from the coupling unit, that is before and after the installation, the fastening element is capable of retaining at the coupling unit, so as to eliminate the disassemble step of the fastening element for the user and thus save installation time.

Another advantage of the invention is to provide a pipeline element coupling piece and coupling method thereof, wherein the radius of curvature of the engaging surface of the pipeline connecting device is not fixed, but varying, and that during the installation process, the engaging surface deforms for ensuring the engaging surface to partially attach or fully attach to a bottom of a groove of the pipeline element so as to facilitate the installation at the pipeline element.

Another advantage of the invention is to provide a pipeline element coupling piece and coupling method thereof, wherein the pipeline connecting device includes at least two coupling units, wherein the curvature shapes of the engaging surfaces of the coupling units are the same or different, that is a curve with variable radius of curvature, and that a minimum value of the curve with variable radius of curvature is equal to or slightly larger than the radius of curvature of the bottom of the groove of the corresponding pipeline element, such that a predetermined position of the engaging surface having a radius of curvature larger than that of the bottom of the groove of the pipeline element deforms to attach at the bottom of the groove of the pipeline element during installation.

Another advantage of the invention is to provide a pipeline element coupling piece and coupling method thereof, wherein the curve with variable radius of curvature includes, but not limited to, one of logarithmic spiral, Archimedes spiral, Pascal snail, ellipse, high power curve, or a combination thereof.

Another advantage of the invention is to provide a pipeline element coupling piece and coupling method thereof, wherein adjacent different curves of variable radius of curvature have the same curvature radius at a junction thereof, so as to ensure coupling reliability.

Another advantage of the invention is to provide a pipeline element coupling piece and coupling method thereof, wherein when the pipeline connecting device is pre-sleeved at the outer side of the pipeline element and to connect and seal the pipeline element, the engaging surface of the pipeline connecting device is able to deform by reducing the gap to partially attach or fully attach at the bottom of the groove of the pipeline element, so as to ensure coupling reliability.

Another advantage of the invention is to provide a pipeline element coupling piece and coupling method thereof, which structure is simple and is pre-adjustable for installation for facilitating manual operation, that increases the assemble efficiency so as to ensure connection reliability.

Additional advantages and features of the invention will become apparent from the description which follows and may be realized by means of the instrumentalities and combinations particularly pointing out in the appended claims.

According to the present invention, the foregoing and other objects and advantages are attained by a pipeline connecting device for coupling two pipeline elements each having a groove and a groove circumference at a bottom of the groove, wherein the pipeline connecting device comprises a plurality of coupling units, a gasket and a fastening element. Each of the coupling units comprises two engaging keys at two coupling end portions thereof, wherein each of the engaging keys has an engaging surface having varying radiuses of curvature. The gasket is disposed in the coupling units. The fastening element is mounted on the coupling units, wherein the pipeline connecting device is adapted for being preassembled on the two pipeline elements to align the engaging keys with the corresponding grooves, wherein when the fastening element is operated to fasten the coupling units together, each of the engaging surfaces is deformed to change the varying radiuses of curvature, so as to substantially match a radius of curvature of the groove circumference.

The present invention further provides a pipeline element coupling piece for coupling two pipeline elements each having a groove and a groove circumference at a bottom of the groove, wherein the pipeline connecting device comprises two or more coupling units, each having an arc-shape, arranged to be coupled end-to-end to define an inner cavity, a gasket, and a fastening element. Each of the coupling units comprises two engaging keys extended from two sides thereof respectively and two engaging surfaces defined at the engaging keys respectively. The gasket is disposed in the coupling units within the inner cavity thereof. The fastening element is mounted at the coupling units to move the coupling units between a preassembled position and an assembled position, wherein at the preassembled position, the coupling units are arranged for encircling the pipeline element to align the engaging keys with the grooves respectively, wherein at the assembled position, the coupling units are fastened with each other for engaging the engaging keys with the grooves respectively in such a manner that each of the engaging keys is deformed to self-adjust a curvature thereof for matching with a curvature of the groove circumference so as to tightly couple the coupling units at the pipeline elements to couple the pipeline elements end-to-end.

The present invention further provides coupling method for coupling two pipeline elements by a pipeline element coupling piece, wherein each of the two pipeline elements has a groove, a groove circumference at a bottom of the groove, and comprises an enlarged coupling end portion, wherein the method comprises the following steps.

(a) Receive the two enlarged coupling end portions of the pipeline elements at two engaging end portions of the pipeline connecting device to align engaging keys of a plurality of coupling units with the corresponding grooves, wherein an engaging surface of each of the engaging keys has varying radius of curvature.

(b) Deform the engaging surface of each of the engaging keys to increase a contacting area between the engaging surface and the corresponding groove circumference to retain each of the engaging keys at the corresponding groove.

The present invention further provides a coupling method for coupling two pipeline elements by a pipeline element coupling piece, wherein the method comprises the following steps.
(A) Sleeve a first coupling end portion of the pipeline element coupling piece on an enlarged coupling end portion of a first pipeline element of the two pipeline elements, and insert an enlarged coupling end portion of a second pipeline element of the two pipeline elements into a second coupling end portion of the pipeline element coupling piece in such a manner that engaging keys of a plurality of coupling units are respectively aligned with the corresponding grooves of the first and second pipeline elements, wherein the engaging surface of each of the engaging keys has varying radiuses of curvature, wherein a gap is defined between the engaging surface of each of the engaging keys and a corresponding groove circumference at a bottom of the groove.
(B) Operate on the fastening element to fasten two fastening end portions of the coupling units to reduce the gap between the engaging surface and the corresponding groove circumference, so as to retain the engaging keys at the corresponding grooves.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

Fig. 1 is a perspective view of a pipeline element coupling piece according to a first preferred embodiment of the present invention.
Fig. 2 is a perspective view illustrating a fastening element being operated for fastening two coupling units of the pipeline element coupling piece according to the above first preferred embodiment of the present invention.
Fig. 3 is an exploded view of the pipeline element coupling piece according to the above first preferred embodiment of the present invention
Fig. 4A and Fig. 4B are perspective views illustrating the pivotally movable coupling units of the pipeline element coupling piece according to the above first preferred embodiment of the present invention.
Fig. 5 is a front view of the pipeline element coupling piece according to the above first preferred embodiment of the present invention.
Fig. 6 is a rear view of the pipeline element coupling piece according to the above first preferred embodiment of the present invention.
Fig. 7 is a left side view of the pipeline element coupling piece according to the above first preferred embodiment of the present invention.
Fig. 8 is a right side view of the pipeline element coupling piece according to the above first preferred embodiment of the present invention.
Fig. 9 is a top view of the pipeline element coupling piece according to the above first preferred embodiment of the present invention.
Fig. 10 is a bottom view of the pipeline element coupling piece according to the above first preferred embodiment of the present invention.
Fig. 11 is a sectional view along line A-A of Fig. 3.
Fig. 12 is a schematic view illustrating a coupling unit of the pipeline element coupling piece according to the above first preferred embodiment of the present invention.
Fig. 13A is a schematic view illustrating the pipeline element coupling piece adapted for being installed with two pipeline elements according to the above first preferred embodiment of the present invention.
Fig. 13B is a schematic view illustrating the pipeline element coupling piece being installed with one of the two pipeline elements according to the above first preferred embodiment of the present invention.
Fig. 13C is a schematic view illustrating the pipeline element coupling piece being preassembled with both of the two pipeline elements according to the above first preferred embodiment of the present invention.
Fig. 13D is a schematic view illustrating the pipeline element coupling piece being firmly assembled on the two pipeline elements according to the above first preferred embodiment of the present invention.
Fig. 14A is a sectional view illustrating the pipeline element coupling piece being preassembled with the two pipeline elements according to the above first preferred embodiment of the present invention.
Fig. 14B is a sectional view illustrating gaps between engaging surfaces and groove circumferences are reduced to assemble the pipeline element coupling piece with the two pipeline elements according to the above first preferred embodiment of the present invention.
Fig. 15A is a schematic view illustrating varying radiuses of curvature of the pipeline element coupling piece according to the above first preferred embodiment of the present invention.
Fig. 15B illustrates different ranges of θ for different specifications of the two pipeline elements coupled with each other by the pipeline element coupling piece according to the above first preferred embodiment of the present invention.
Fig. 16 is a schematic view of a pipeline element coupling piece according to a second preferred embodiment of the present invention.
Fig. 17A is a schematic view illustrating the pipeline element coupling piece being preassembled on the pipeline elements according to the above second preferred embodiment of the present invention.
Fig. 17B is a schematic view illustrating the pipeline element coupling piece being firmly assembled on the pipeline elements according to the above second preferred embodiment of the present invention.
Fig. 18 is a schematic view illustrating the deformation of the engaging surfaces of the pipeline element coupling piece according to the above second preferred embodiment of the present invention.
Fig. 19 is a schematic view illustrating varying radiuses of curvature of the pipeline element coupling piece according to the above second preferred embodiment of the present invention.
Fig. 20 illustrates different ranges of θ and values of Da and Db for different specifications of the two pipeline elements according to the above second preferred embodiment of the present invention.
Fig. 21 is a perspective view of a pipeline element coupling piece according to a third preferred embodiment of the present invention.
Fig. 22 is a perspective view illustrating from one side of the at least two coupling units being pivotally rotated according to the above third preferred embodiment of the present invention.
Fig. 23 is a perspective view illustrating from another side of the at least two coupling units being pivotally rotated according to the above third preferred embodiment of the present invention.
Fig. 24 is a partial section view illustrating the pipeline element coupling piece being installed with two pipeline element according to the above third preferred embodiment of the present invention.
Fig. 25 is a side view illustrating the pipeline element coupling piece according to the above third preferred embodiment of the present invention.
Fig. 26 is a partial section view of a portion of the coupling unit of the pipeline element coupling piece according to the above third preferred embodiment of the present invention.
Fig. 27 is a schematic view illustrating a first coupling unit of the pipeline element coupling piece according to the above third preferred embodiment of the present invention.
Fig. 28 is sectional schematic view illustrating an application of the pipeline element coupling piece according to the above third preferred embodiment of the present invention.
Fig. 29A is a sectional view illustrating the gap formed between the engaging surface of the coupling unit of the pipeline element coupling piece and the bottom of the groove of the pipeline element during pre-sleeving installation according to the above third preferred embodiment of the present invention.
Fig. 29B is a sectional view illustrating the minimized gap between the engaging surface of the coupling unit of the pipeline element coupling piece and the bottom of the groove of the pipeline element after installation according to the above third preferred embodiment of the present invention.
Fig. 30 is a schematic view illustrating an application of a pipeline element coupling piece not within the scope of the claims according to a first alternative mode of the above third preferred embodiment of the present invention.
Fig. 31A is a sectional view of the pipeline element coupling piece illustrating the gap formed between the engaging surface thereof and the bottom of the groove of the pipeline element during pre-sleeving installation according to the first alternative mode of the above third preferred embodiment of the present invention.
Fig. 31B is a sectional view of the pipeline element coupling piece illustrating the minimized gap between the engaging surface thereof and the bottom of the groove of the pipeline element after installation according to the first alternative mode of the above third preferred embodiment of the present invention.
Fig. 32 is a schematic view illustrating the engaging surface of the coupling unit of the pipeline element coupling piece according to the first alternative mode of the above third preferred embodiment of the present invention.
Fig. 33 is a schematic view of an application of a pipeline element coupling piece according to a second alternative mode of the above third preferred embodiment of the present invention.
Fig. 34A is a sectional view of the pipeline element coupling piece illustrating the gap formed between the engaging surface thereof and the bottom of the groove of the pipeline element during pre-sleeving installation according to the second alternative mode of the above third preferred embodiment of the present invention.
Fig. 34B is a sectional view of the pipeline element coupling piece illustrating the minimized gap between the engaging surface thereof and the bottom of the groove of the pipeline element after installation according to the second alternative mode of the above third preferred embodiment of the present invention.
Fig. 35 is a sectional view illustrating an alternative mode of the gasket of the pipeline element coupling piece according to the second alternative mode of the above third preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art.

Those skilled in the art should understand that, in the disclosure of the present invention, terminologies of "longitudinal," "lateral," "upper," "front," "back," "left," "right," "perpendicular," "horizontal," "top," "bottom," "inner," "outer," and etc. that indicate relations of directions or positions are based on the relations of directions or positions shown in the appended drawings, which are only to facilitate descriptions of the present invention and to simplify the descriptions, rather than to indicate or imply that the referred device or element is limited to the specific direction or to be operated or configured in the specific direction. Therefore, the above-mentioned terminologies shall not be interpreted as confine to the present invention.

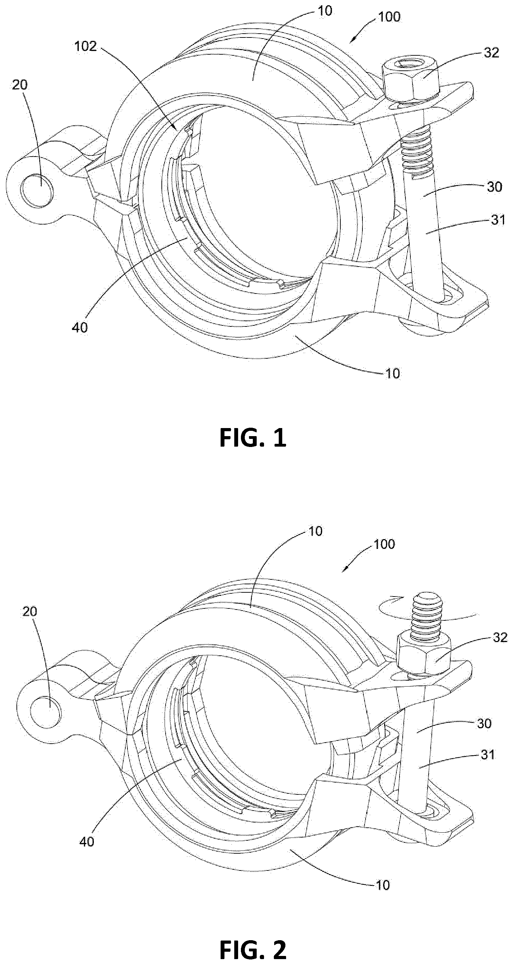

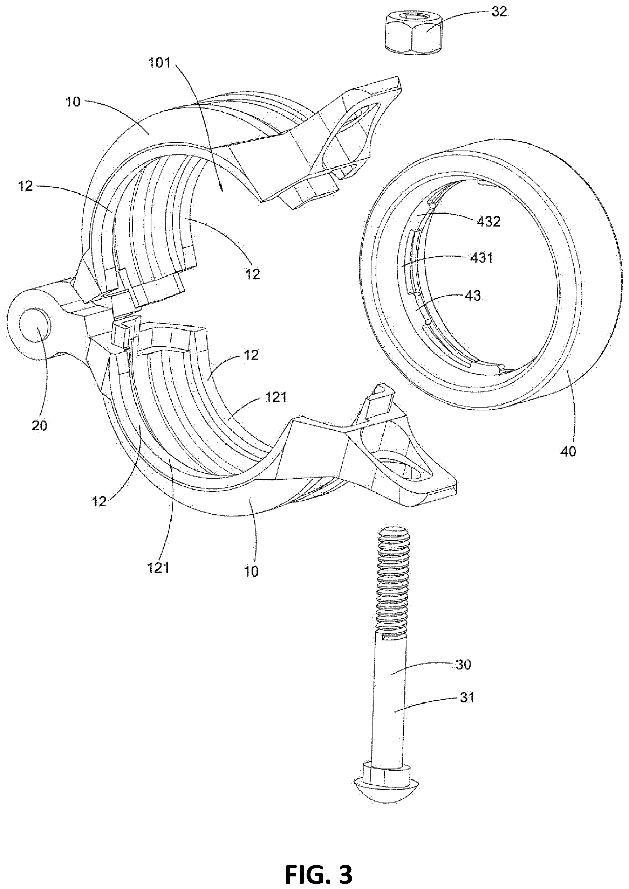

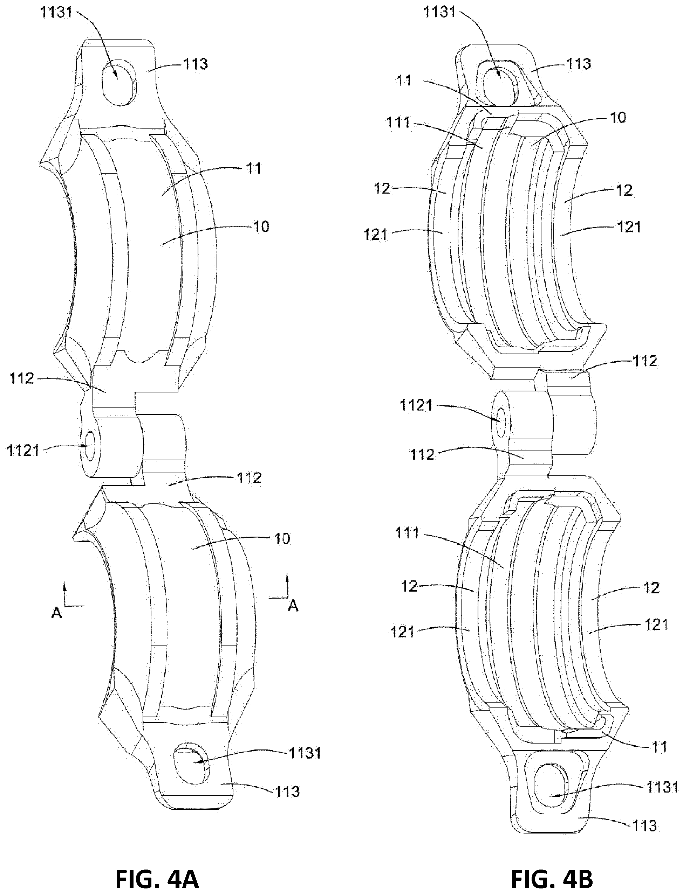

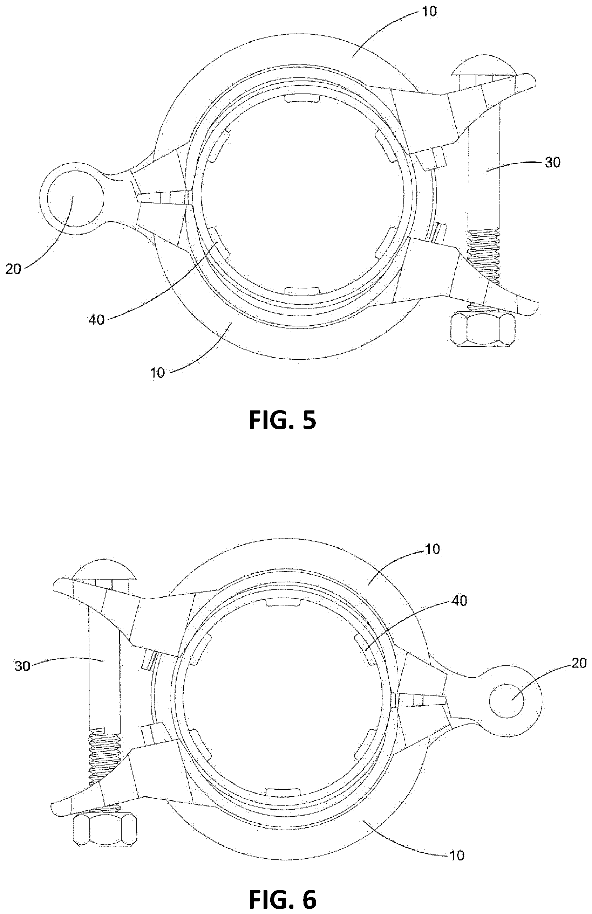

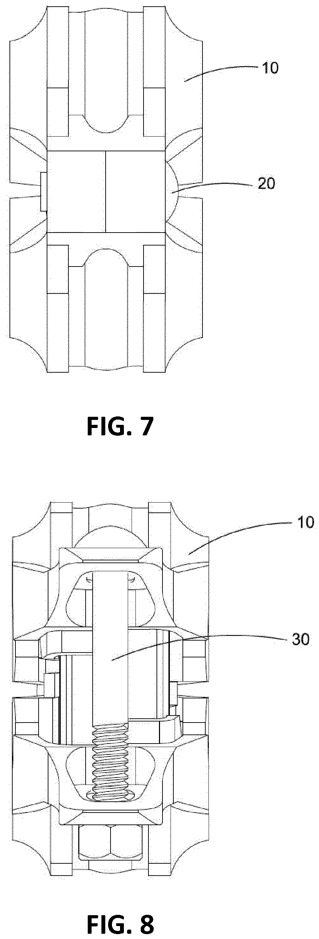

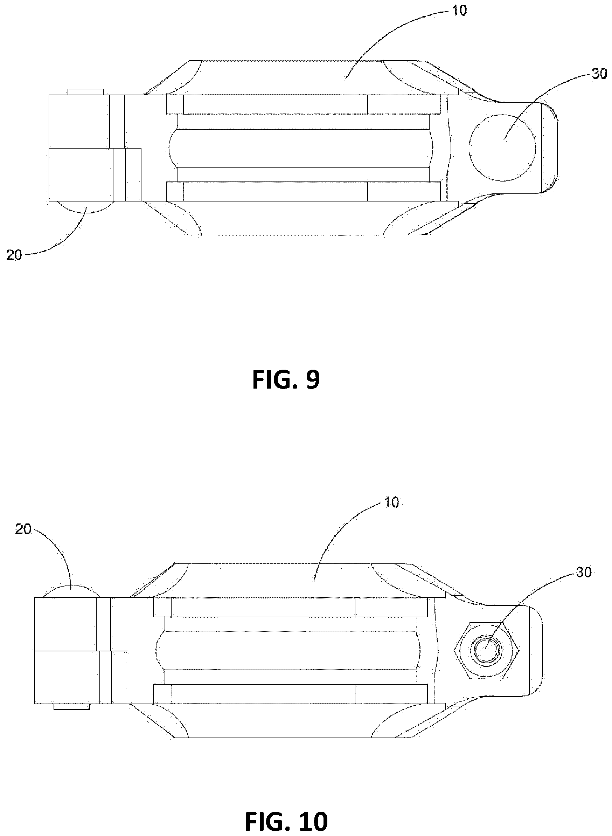

Referring to Fig. 1A to Fig. 15 of the drawings, a pipeline element coupling piece 100 of a pipeline connecting device for coupling two pipeline elements 200 according to a first preferred embodiment of the present invention is illustrated. The pipeline element coupling piece 100 comprises two coupling units 10, a pivotal connecting element 20 pivotally connecting the two coupling units 10 for allowing the two coupling units 10 to pivotally move with respect to each other, a fastening element 30 for fastening the two coupling units 10 with each other after the pipeline element coupling piece 100 is installed on the two pipeline elements 200, and a gasket 40 disposed in the two coupling units 10.

According to this preferred embodiment of the present invention, two opposed ends of the pipeline element coupling piece 100 are respectively connected by the pivotal connecting element 20 and the fastening element 30. In another alternative mode, the two coupling units 10 are movably coupled with each other, two fastening elements 30 may be respectively arranged on the two opposed ends of the pipeline element coupling piece 100 for fastening the two coupling units 10 with each other.

Accordingly, the two coupling units 10, which can be made of metal or plastics, can be coupled with each other to form a substantially loop structure defining an inner cavity 101. In one embodiment, each of the coupling units 10 has a C-shape defining two sides, wherein the sides of the coupling units 10 are pivotally connected via the connecting element 20. The coupling units 10 are adapted to move between an opened position that the other sides of the coupling units 10 are moved away from each other, and a closed position that the other sides of the coupling units 10 are moved to contact with each other in an end-to-end manner, so as to form the inner cavity 101 with the loop structure. The fastening element 30 is configured to fasten the coupling units 10 at the closed position.

The pivotal connecting element 20 and the fastening element 30 are respectively provided on two opposite sides of the two coupling units 10 for connecting the two coupling units 10. The gasket 40 is disposed in the inner cavity 101 formed by the two coupling units 10 for providing a sealing effect when the two pipeline elements 200 are assembled with the pipeline element coupling piece 100.

The two pipeline elements 200 are embodied as a first pipeline element 210 and a second pipeline element 220 and each of the pipeline elements 210 and 220 can be but not limited to a pipe, a pipe fitting such as an elbow, a vale and a tee, a device with a pipe-like component. Accordingly, the pipeline element coupling piece 100 can be used for coupling two pipes, a pipe and a pipe fitting, two pipe fittings, a pipe and a device with a pipe-like components, and two devices with pipe-like components. Each of the pipeline elements 200 comprises a groove end portion having a groove 201 and an enlarged coupling end portion 202.

Each of the two coupling units 10 comprises a housing body 11 and two engaging keys 12 integrally and inwardly extended from the housing body 11 at two end portions thereof. Each of the two pipeline elements 200 has the groove 201 adjacent to the enlarged coupling end portion 202 thereof for engaging with the corresponding engaging key 12 of the two coupling units 10. Accordingly, the groove 201 is indented on an outer circumferential surface of the pipeline element 200, such that a diameter of the groove 201 is smaller than an outer diameter of the pipeline element 200. The diameter of the coupling end portion 202 is larger than the diameter of a groove circumference 203 at a bottom of the groove 201. In one embodiment, after forming the groove 201, the coupling end portion is formed in such a manner that the diameter of the coupling end portion 202 is gradually increased from the groove 201 to the end of the pipeline element 200. In another embodiment, when the groove 201 is formed by cutting off the portion corresponding to the position of the groove 201, the diameters of the coupling end portion 202 along the length can be the same.

According to this preferred embodiment of the present invention, there is no need for disassembling the fastening element 30 and the gasket 40 during the installation of the pipeline element coupling piece 100 with the two pipeline elements 200. In other words, the gasket 40 is disposed within the two coupling units 10, and the fastening element 30 is also assembled on the two coupling units 10, and then the whole pipeline element coupling piece 100 is installed on the two pipeline elements 200 for coupling with the two pipeline elements 200.

Accordingly, there is an opening 102 defined between the two engaging keys 12 of the two coupling units 10 at each of the two end portions thereof that it is big enough for the corresponding enlarged coupling end portion 202 of one of the two pipeline elements 200 to pass therethrough, so that the whole pipeline element coupling piece 100 can be directly installed on the two pipeline elements 200 without requiring to disassemble the gasket 40 and the fastening element 30.

According to this preferred embodiment of the present invention, each of the engaging keys 12 of the coupling units 10, has an engaging surface 121 which has varying radiuses of curvature, each of the pipeline elements 200 has the groove circumference 203 at the bottom of the corresponding groove 201. In other words, the groove circumference 203 is the bottom wall of the groove 201. When the pipeline element coupling piece 100 of the present invention is preassembled on the pipeline elements 200 to align the engaging keys 12 with the corresponding grooves 201, the fastening element 30 is operated to firmly fasten the two coupling units 10 in such a manner that the engaging surfaces 121 are deformed and a part of or all of the engaging surface is attached on the corresponding groove circumference 203.

In other words, the engaging surface 121 of each of the engaging keys 12 of the coupling units 10 does not have a fixed radius of curvature, and thus each of the engaging surfaces 121 is not a circular surface with a round curvature. The groove circumference 203 of each of the pipeline elements 200 has a substantially round curvature. When the pipeline element coupling piece 100 of the present invention is preassembled on the pipeline elements 200 to align the engaging keys 12 with the corresponding grooves 201, a gap 103 is formed between each engaging surface 12 of each of the two coupling units and the corresponding groove circumference 203 of each of the pipeline elements 200. And then when the fastening element 30 is operated, the gap 103 is reduced until each of the engaging surfaces 121 is retained at a position that the firmly and stably coupling between the pipeline elements 200 with the pipeline element coupling piece 100 is achieved.

According to this preferred embodiment, each of the engaging surfaces 121 defines a curve of varying radiuses of curvature which can be but not limited to a logarithmic spiral curve, an Archimedes spiral curve, a pascal spiral curve, an ellipse curve, a high power curve and a combination thereof. Accordingly, each of the engaging surfaces 121 does not have a round curvature and thus the gap 103 is created when each of the engaging keys 12 of the pipeline element coupling piece 100 of the present invention is preassembled in the corresponding grooves 201 of the pipeline elements 200.

In addition, at least a portion of each of the engaging surfaces 121 has a relative large radius of curvature which is larger than a radius of curvature of the enlarged coupling end portion 202 of each of the pipeline elements 200, so that a size of the opening 102 formed between two engaging surfaces 121 of the two engaging keys 12 is larger than a diameter of the enlarged coupling end portion 202 of each of the two pipeline elements 200, and thus the pipeline element coupling piece 100 can be mounted on the pipeline elements by sleeving on the enlarged coupling end portion 202 of each of the pipeline elements 200. In other word, the enlarged coupling end portion 202 of each of the pipeline elements 200 is able to be inserted into the pipeline element coupling piece 100 by passing through the opening 102 between the two engaging surfaces 121.

When the pipeline element coupling piece 100 is mounted to a position that it is preassembled with the pipeline elements 200 to align each of the engaging keys 12 with the corresponding grooves 201, the gap 103 is created between each of the engaging key 12 of the pipeline element coupling piece 100 and the corresponding groove circumference 203 of each of the pipeline elements 200, allowing the pipeline element coupling piece 100 to be installed on the pipeline elements 200 in a preassembled state without requiring to disassemble the fastening element 30 and the gasket 40. When the gap 103 is gradually reduced by operating on the fastening element, each of the engaging surface 121 is deformed to allow a deformed radius of curvature thereof to be substantially equal to the radius curvature of the groove circumference 203 of each of the pipeline elements 200.

More specifically, the housing body 11 of each of the coupling units 10 comprises a body portion 111, a pivot connecting end portion 112 and a fastening end portion 113. The pivot connecting end portion 112 and the fastening end portion 113 are respectively integrally extended from two opposite sides of the body portion 111. The pivot connecting element 20 pivotally connecting the two pivot connecting end portions 112 of the two housing bodies 11 in such a manner that the two pivot connecting end portions 112 of the two housing bodies 11 are able to pivotally move with respect to each other. The fastening element 30 is mounted to the two fastening end portions 113 of the two housing bodies 11 for firmly fastening the two coupling units 10 with each other.

As shown in Fig. 1 to Fig. 10 of the drawings, the pipeline element coupling piece 100 is assembled with its components before being installed on the pipeline elements 200. Referring to Fig. 2 of the drawings, the pipeline elements 200 are not shown in the drawings, Fig. 2 illustrates that the fastening element 30 can be operated to drive the two fastening end portions 113 to move toward each other, so that the pipeline element coupling piece 100 in a preassembled state can be moved into a final assembled state.

According to this preferred embodiment, each of the pivot connecting end portions 112 has a connecting hole 1121 and the pivotal connecting element 20 is a connecting pin penetrating through the connecting hole 1121. Each of the fastening end portions 113 has a fastening hole 1131 while the fastening element 30 is embodied to comprise a bolt 31 penetrating through the fastening hole 1131 and a nut 32. Accordingly, when the pipeline element coupling piece 100 is preassembled on the pipeline elements 200, the bolt 31 and the nut 32 can be operated, so as to direct the engaging surfaces 121 to engage and contact with the groove circumferences 203.

Referring to Fig. 1 to Fig. 10 of the drawings, before installation, the gasket 40 is disposed in the inner cavity 101 of the housing bodies 11, the bolt 31 is assembled with the two fastening end portions 113 and the nut 32 is assembled on the bolt 31. And when the pipeline element coupling piece 100 is able to be installed with the pipeline elements 200, the gasket 40 is not required to be detached from the housing bodies 11, the bolt 31 and nut 32 are not required to be removed from the two fastening end portions 113.

Accordingly, the two coupling units 10 can be pivotally moved with respect to the pivotal connecting element 20 which functions as a pivot point. When the fastening element 30 is operated, the openings 102 of the pipeline element coupling piece 100 are reduced, and the distance between the two fastening end portions 113 is reduced, so that when the engaging keys 12 are moved to desired positions that a part of or all of the engaging surfaces 121 are attached to the groove circumferences 203 so that the engaging keys 12 are firmly retained at the corresponding grooves 201 of the pipeline elements 200.

Preferably, each of the two coupling units 10 has two symmetrical engaging keys 12 at two opposite engaging ends thereof. An engaging key 12 of one of the two coupling units 10 is aligned with another engaging key 12 of the other coupling unit 10 to form the opening 102. In other words, two pairs of the engaging keys 12 form two openings 102 at the two engaging ends of the pipeline element coupling piece 100. Furthermore, the two coupling units 10 are preferred to be constructed to have a same structure that all of the coupling units 10 can be manufactured in the foundry. When the bolt 31 and the nut 32 of the fastening element 30 are operated, both of the two pairs of engaging surfaces 121 at the two engaging ends thereof are deformed so as to direct the engaging surfaces 121 to have contact with the groove circumferences 203 of the pipeline elements 200.

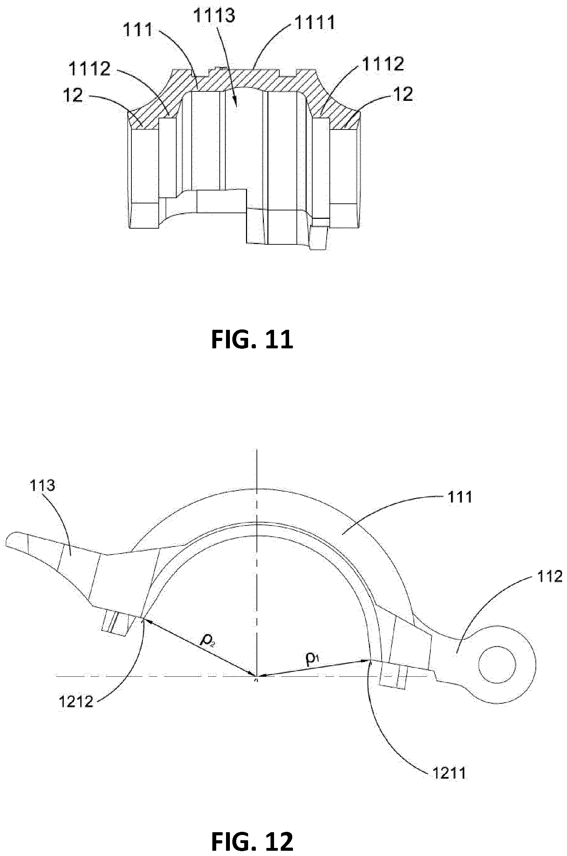

Referring to Fig. 12 of the drawings, according to this preferred embodiment, a proximate end point 1211 of each of the engaging surfaces 121 of the engaging keys 12 adjacent to the pivot connecting end portion 112 of the housing body 11 of the coupling unit 10 has a smallest radius of curvature that is equal to or slightly larger than (not larger than 5%) the radius of curvature of the groove circumference 203 of each pipeline element 200. In other words, the smallest radius of curvature at the proximate end point 1211 of each of the engaging surfaces 121 is substantially the same as the radius of curvature of the groove circumference 203 of each pipeline element 200. Therefore, when the pipeline element coupling piece 100 is preassembled with the pipeline elements 200, the surface at the proximate end point 1211 of each of the engaging surfaces 12 is attached on the corresponding groove circumference 203 of each of the pipeline elements 200.

A distal end point 1212 of each of the engaging surfaces 121 of the engaging keys 12 adjacent to the fastening end portion 113 of the housing body 11 of the coupling unit 10 has a largest radius of curvature that is larger than the radius of curvature of the enlarged coupling end portion 202 of each pipeline element 200. Therefore, the opening 102 defined between the pair of engaging surfaces 121 is big enough for the pipeline element coupling piece 100 to be directly sleeved on the pipeline elements 200 so as to preassemble the pipeline element coupling piece 100 with the pipeline elements 200, the surface at the distal end point 1212 of each of the engaging surfaces 12 is not having contact with the corresponding groove circumference 203 of each of the pipeline elements 200 and the gap 103 is actually formed between each of the engaging surfaces 12 in the corresponding groove 201 and the corresponding groove circumference 203 of each of the pipeline elements 200.

Accordingly, as a preferred example, radiuses of curvatures of each of the engaging surfaces 121 according to this preferred embodiment of the present invention are preferred to be gradually increased from the proximate end point 1211 to the distal end point 1212.

Referring to Fig. 11 of the drawings, the body portion 111 of each of the housing bodies 11 further comprises a middle chamber body portion 1111 and two shoulder portions 1112 at two opposite sides of the chamber body portion 1111. The two engaging keys 12 are integrally and inwardly extended from an inner surface of the body portion 111. A retaining groove 1113 is formed within the chamber body portion 111 for retaining the gasket 40 in position.

The inner surfaces of the chamber body portion 1111 and shoulder portions 1112 can be a circular surface. Alternatively, the inner surfaces of the chamber body portion 1111 and shoulder portions 1112 may also be formed with varying radiuses of curvature.

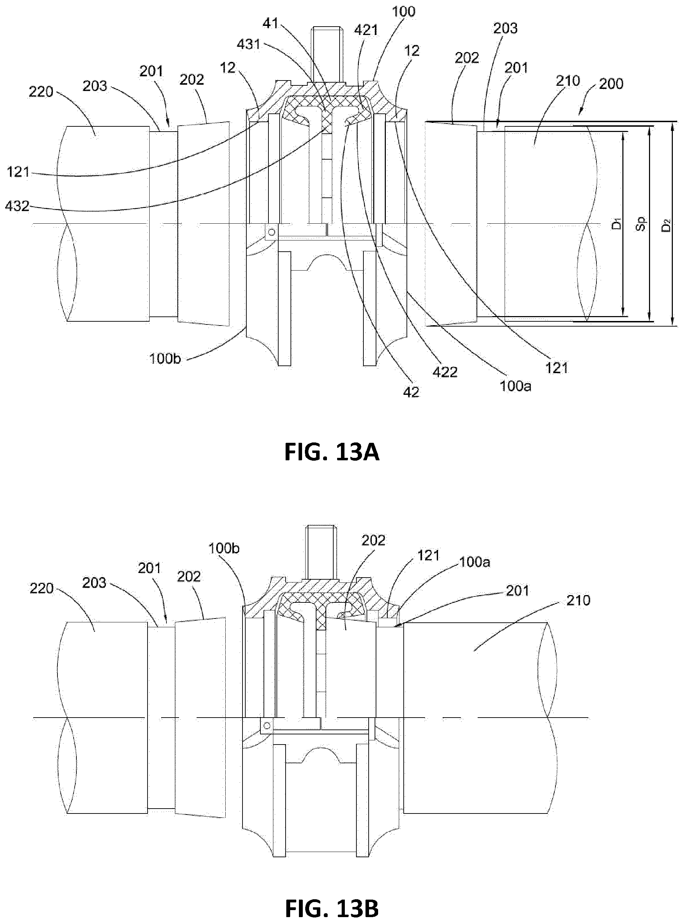

Referring to Fig. 13A to Fig. 13D of the drawings, the process for assembling the pipeline element coupling piece 100 with the pipeline elements of the instant invention is illustrated. As shown in Fig.13A of the drawings, the pipeline element coupling piece 100 is assembled with its components before being installed with the two pipeline elements 200 each comprising the enlarged end portion 202 and having the groove 201.

As shown in Fig. 13B of the drawings, without requiring to disassemble the gasket 40 and the fastening element 30, the pipeline element coupling piece 100 is able to be directly sleeved on the first pipeline element 210. More specifically, the pipeline element coupling piece 100 has a first coupling end portion 100a which receives the enlarged coupling end portion 202 of the first pipeline element 210. When a user mounts the pipeline element coupling piece 100 with the first pipeline element 210, the enlarged coupling end portion 202 of the first pipeline element 210 is inserted into the first coupling end portion 100a of the pipeline element coupling piece 100, and the user may use one or more fingers to press on a second coupling end portion 100b of the pipeline element coupling piece 100 to retain the pipeline element coupling piece 100 in position, so as to facilitate the installation of the first pipeline element 210. The engaging key 12 adjacent to the first coupling end portion 100a is aligned with and retained at the groove 201 of the first pipeline element 210.

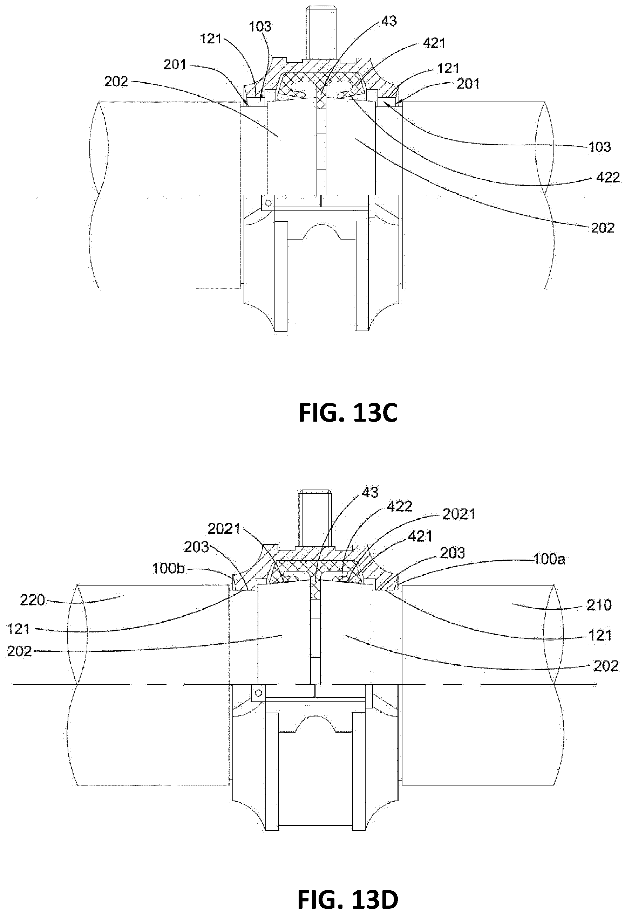

Referring to Fig. 13C of the drawings, the second pipeline element 220 is then installed with the pipeline element coupling piece 100, so that the pipeline element coupling piece 100 is in a preassembled state. More specifically, the enlarged coupling end portion 202 of the second pipeline element 220 is inserted into the second coupling end portion 100b of the pipeline element coupling piece 100, so that the engaging key 12 adjacent to the second coupling end portion 100b is also aligned with and retained at the groove 201 of the second pipeline element 220.

Accordingly, since each of the engaging surfaces 121 of the pipeline element coupling piece has varying radiuses of curvature along its circumferential extending direction, the gap 103 is formed between each of the engaging surfaces 121 of the pipeline element coupling piece 100 and the groove circumferences 203 of the pipeline elements 210 and 220 when the engaging keys 12 are aligned with the corresponding grooves 201 of the pipeline elements 210 and 220. A width of the grooves 201 of the pipeline element is slightly larger than a width of the engaging keys 12.

In addition, the gasket 40 is assembled in the coupling units 10, so that when the pipeline element coupling piece 100 is preassembled with the two pipeline elements 210 and 220, the gasket 40, which is made of a flexible material, is wound around the enlarged coupling end portions 202 of the two pipeline element 210 and 220 to provide a sealing effect for the coupling of the two pipeline element 210 and 220.

The gasket 40 comprises a base body 41, two biasing elements 42 integrally extended from the base body 41, and a retaining element 43 integrally extended from a middle inner surface of the base body 41. In other words, the biasing elements 42 are extended from two sides of the base body 41 respectively, wherein the retaining element 43 is located between the biasing elements 42. The retaining element 43 further comprises a retaining body 431 and a plurality of protrusions 432 which are spaced apart from each other and are integrally extended from the retaining body 431. When the two enlarged coupling end portions 202 of the pipeline elements 200 are preassembled in the coupling units 10, the protrusions 432 are sandwiched between the two enlarged coupling end portions 202 of the pipeline elements 200, while the two biasing elements 42 are respectively biasing against outer walls 2021 of the enlarged coupling end portions 202 of the pipeline elements 200. When the fastening element 30 is operated for fastening the two fastening end portions 113, the gasket 40 is also deformed so as to be firmly attach with the enlarged coupling end portions 202 of the pipeline elements 200. More specifically, each of the biasing element 42 comprises an extending portion 421 integrally extended from the base body 41 and a biasing portion 422 inwardly and inclinedly extended form the extending portion 421 for biasing against the outer wall 2021 of the corresponding enlarged coupling end portion 201 of the pipeline elements 200. Particularly, the base body 41 has an annular shape, wherein the extending portions 421 of the biasing elements 42 are inwardly and radially extended from two sides of the base body 41 respectively, while the biasing portions 422 are inclinedly extended from free ends of the extending portions 421, such that the biasing portions 422 are extended toward each other. During the assembling process of the pipeline element coupling piece 100 with the pipeline elements 200, the biasing element 42 is deformed and the biasing portion 422 is moved along the outer wall 2021 of the corresponding coupling end portion 202, so as to enhance the sealing effect between the gasket 40 and the enlarged coupling end portions 202. In other words, the biasing portion 422 of the biasing element 42 is pushed inwardly when the pipeline element 200 is coupled at the pipeline element coupling piece 100.

Referring to Fig. 13D of the drawings, when the fastening element 30 is operated to firmly retain the engaging keys 12 at the grooves 201, the gap 103 between each engaging surface 121 and the groove circumference 203 is reduced, each of the engaging surfaces 121 is deformed to change its radiuses of curvatures along its circumferential direction to have contact with the groove circumference 203. Each of the deformed engaging surfaces has a substantially round curvature for matching with the radius of curvature of the corresponding groove circumference 203 of each of the pipeline elements 210 and 220.

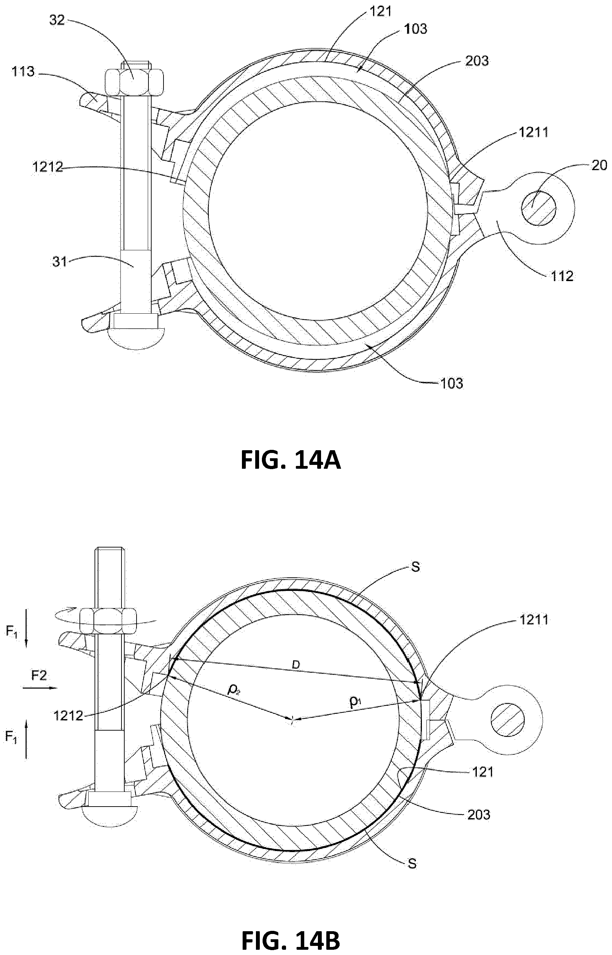

Figs. 14A and 14B are sectional views illustrating the pipeline element coupling piece 100 of the pipeline connecting device being operated from the preassembled state shown in Fig. 14A to the final assembled state shown in Fig. 14B. As shown in Fig. 14A, the pipeline element coupling piece 100 is preassembled on the pipeline elements 200 while the fastening element 30 comprising the bolt 31 and the nut 32 is in a loose state, the gap 103 is formed between each of the engaging surfaces and the corresponding groove circumference 203 of each of the pipeline elements 200.

According to this preferred embodiment, the radius of curvature at the proximate end point 1211 adjacent to the pivot connecting end portion 112 is substantially equal to the radius of curvature of the corresponding groove circumference 203, the radius of curvature at the distal end point 1212 adjacent to the fastening end portion 113 is larger than the radius of curvature of the enlarged coupling end portion 202, and the radiuses of curvature of each of the engaging surface 121 are gradually increased from the proximate end point 1211 to the distal end point 1212, so that the gap 103 is also gradually increased from the position adjacent to the pivot connecting end portion 112 to a position adjacent to the fastening end portion 113.

As shown in Fig. 14B, the nut 32 is screwed to move along the bolt 31, a distance between the two fastening end portions 113 is reduced, the gap 103 is reduced, so that each of the engaging surfaces 121 tends to be moved to a position that it is having contact with the groove circumference 203. Accordingly, each of the engaging surfaces 121 is deformed to change the varying radiuses of curvature, so as to substantially match a radius of curvature of the groove circumference 203, so that a perimeter of the pair of engaging surfaces 121 is substantially equal to or slightly larger than a perimeter of the corresponding groove circumference 203.

When in the assembled state, the perimeter of the pair of engaging surfaces 121 is substantially equal to the perimeter of the corresponding groove circumference 203, the pair of engaging surfaces 121 form a substantially circular surface having a substantially round curvature matching with the curvature of the corresponding groove circumference 203, the gap 103 is substantially vanished, a diameter of the pair of engaging surfaces 121 is substantially the same as the diameter of the corresponding groove circumference 203, all of the engaging surfaces 121 are substantially attached on the corresponding groove circumferences 203, so that a relatively rigid coupling between the pipeline element coupling piece 100 and the pipeline elements 200 is achieved, so as to ensure the reliability of the coupling of the two pipeline elements.

If the perimeter of the pair of engaging surfaces 121 is larger than the perimeter of the corresponding groove circumference 203 when the pipeline element coupling piece 100 is in the final assembled state, a minimum clearance is still remained between a part of the engaging surface 121 and a part of the corresponding groove circumference 203, most part of the engaging surface 121 is attached on the corresponding groove circumference 203, the diameter of the pair of engaging surfaces 121 is slightly larger than the diameter of the corresponding groove circumference 203 (not larger than 10%), so that a relatively flexible coupling between the pipeline element coupling piece 100 and the pipeline elements 200 is achieved.

Referring to Fig. 14B of the drawings, when the nut 32 is being rotated to generate a torque, Forces F1 are created along the bolt 31 by the torque, which results in the deformation of the engaging surfaces 121 of the coupling units 10 and also results in the creation of the radial Force F2. When the torque is gradually increased, the deformation of the coupling units becomes more apparent, and the deformation is finished until the torque reaches to a predetermined value. There is substantially no deformation at the proximate end point 1211 adjacent to the pivot connecting end portion 112, but the deformation from the proximate end point 1211 to the distal end point 1212 is gradually increased, and the maximum deformation is produced at the distal end point 1212, so that the radius of curvature ρ₂ at the distal end point 1212 is reduced to be substantially equal to the radius of curvature ρ₁ at the distal end point 1211 which is substantially equal to the radius of curvature of the corresponding round groove circumference 203.

As a typical example of this preferred embodiment of the present invention, each of the engaging surfaces 121 defines a logarithmic spiral curve, in other words, a cross section of each of the engaging surfaces 121 forms a curve which is a logarithmic spiral curve. When the pipeline element coupling piece 100 is operated from the preassembled state to the final assembled state, the deformation of each of the engaging surfaces 121 results in deformed and varied radiuses of curvature thereof, and the variation range thereof is about 4.5% to 12%. A parameter D denotes a distance between the proximate end point 1211 and the distal end point 1212, during the tight fastening process of the pipeline element coupling piece 100, the value of parameter D is gradually reduced, and the variation range of the parameter D is about 4% to 15%.

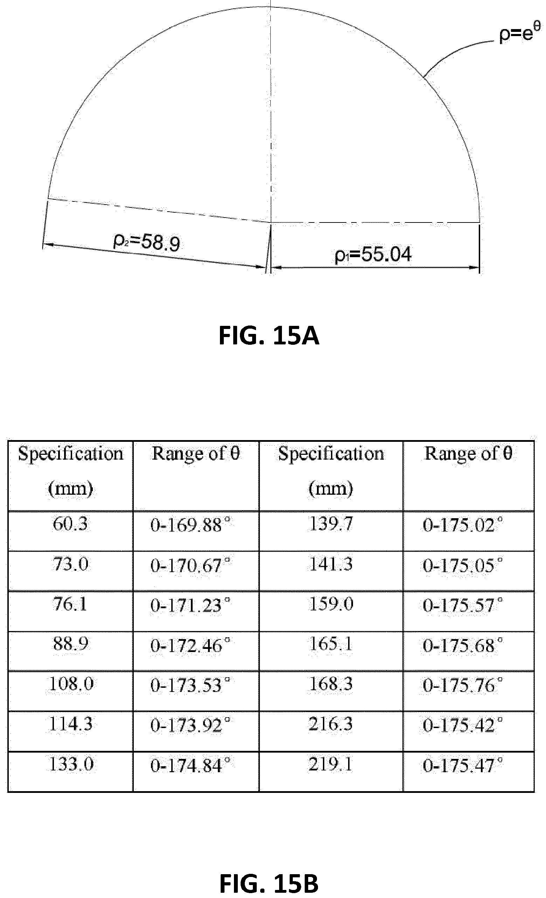

Referring to Fig. 15A and 15B of the drawings, according to a specific example of this preferred embodiment of the present invention, each of the engaging surfaces 121 defines a logarithmic spiral curve having an equation of ρ=e^{θ}, wherein θ has a range of 0∼180°.

More specifically, Fig. 15B illustrates different ranges of θ for different specifications of the two pipeline elements 200 which are coupled with each other by the pipeline element coupling piece 100. The specification of the two pipeline elements 200 is the diameter of the pipeline elements 200 at a regular body portion other than the enlarged coupling end portion 202.

According to this preferred embodiment, the value of the parameter ρ₁ is the radius of curvature at the proximate end point 1211, and is also the radius curvature of the groove circumference 203 of the corresponding pipeline element 200, the value of the parameter ρ₂ is the radius curvature at the distal end point 1212 of the engaging surface 121 of the corresponding pipeline element coupling piece 100, a parameter D1 denotes the diameter of the groove circumference 203 of each of the pipeline elements 200, a parameter D2 denotes the diameter of the enlarged coupling end portion 202 of each of the pipeline elements 200, as shown in Fig. 13A, D2 is equal to the diameter at a proximate end of the enlarged coupling end portion 202 which is distal to distal end adjacent to the groove 201, Sp denotes the specification of the pipeline element coupling piece 100 which is a diameter of a body portion of the pipeline element coupling piece and may be smaller than D2, or D2 is equal to Sp, then considering that the parameter ρ₂ which is the radius curvature at the distal end point 1212 of the engaging surface 121 of the corresponding pipeline element coupling piece 100 should be larger than the radius of curvature of the enlarged coupling end portion 202, the value of the parameter ρ₂ should be added with an additional allowance R which has a range of 0.3-1mm. Accordingly, ρ₁=D1/2, while ρ₂=D2/2+R.

As a specific example, when the specification Sp of the pipeline element coupling piece 100 is 114.3mm, the diameter D1 of the groove circumference 203 of each of the pipeline elements 200 is 110.08mm, the diameter D2 of the enlarged coupling end portion 202 of each of the pipeline elements 200 is 116.8mm, and R is 0.5mm, then ρ₁=110.08/2=55.04mm, while ρ₂ =116.8/2+0.5=58.9mm.

According to this preferred embodiment of the present invention, referring to Fig. 14B of the drawings, the present invention further provides a method for coupling two pipeline elements 200 via the pipeline element coupling piece 100. More specifically, the method comprises the following steps:
(a) Receive the two enlarged coupling end portions 202 of the pipeline elements 200 at two coupling end portions 100a and 100b of the pipeline element coupling piece 100 to align each of the engaging keys 12 of the coupling units 10 with the corresponding groove 201 of the pipeline elements 200, wherein the engaging surface 121 of each of the engaging keys 12 has varying radiuses of curvature. In other words, a cross section of the engaging surface 121 of each of the engaging keys 12 define a curve which is a curve having varying radiuses of curvature.
(b) Deform the engaging surface 121 of each of the engaging keys 12 to increase a contacting area S between the engaging surface 121 and the corresponding groove circumference 203 to firmly retain each of the engaging keys 12 at the corresponding groove 201.

According to the preferred embodiment of the present invention, the step (b) further comprises the step of fastening two fastening end portions 113 of the two coupling units 10 by the fastening element 30 to actuate the engaging surface 121 of each of the engaging keys 12 to deform.

Accordingly, the radiuses of curvature of at least a portion of the engaging surface 121 of each of the engaging keys 12 is reduced in the step (b), so as to match the radius of curvature of the groove circumference 203 of the corresponding pipeline element 200, so that this portion of the engaging surface 121 of each of the engaging keys 12 is having contact with the groove circumference 203 of the corresponding pipeline element 200 when the pipeline element coupling piece 200 is in the assembled state.

In the step (a), the method further comprises a step of forming the gap 103 between the engaging surface 121 of each of the engaging keys 12 and the groove circumference 203 of the corresponding pipeline element 200. The step (b) further comprises a step of reducing the gap 103 between the engaging surface 121 of each of the engaging keys 12 and the groove circumference 203 of the corresponding pipeline element 200 to direct the engaging surface 121 of each of the engaging keys 12 to attach to the groove circumference 203 of the corresponding pipeline element 200.

The step (b) may comprise a step of deforming the engaging surface 121 of each of the engaging keys 12 to form a substantially round curvature which is matched with the radius of curvature of the groove circumference 203 of the corresponding pipeline element 200, so as to firmly retain each of the engaging keys 12 at the corresponding groove 201 of the corresponding pipeline element 200.

The method further comprises a step of providing a seal between the gasket 40 and the enlarged coupling end portions 202 of the pipeline elements 200 by deforming the gasket 40 which is wound around the enlarged coupling end portions 202 of the pipeline elements 200 when the fastening element 30 is operated to fasten the fastening end portions 113 of the coupling units 10.

Before step (a), the method further comprises a step of allowing the enlarged coupling end portions 202 of the pipeline elements to pass through the opening 102 formed by the two coupling units 10 at the two coupling end portions 100a and 100b thereof without requiring to disassemble the fastening element 30 and the gasket 40 from the coupling units 10.

The present invention actually further provides a method for coupling the pipeline elements 200 by the pipeline element coupling piece 100 for facilitating the quick operation of the operator. More specifically, the method comprises the following steps:
(A) Sleeve a first coupling end portion 100a of the pipeline element coupling piece 100 on the enlarged coupling end portion 202 of a first pipeline element 210, and inserting the enlarged coupling end portion 202 of the second pipeline element 200 into the second coupling end portion 100b of the pipeline element coupling piece 100 in such a manner that each of the engaging keys 12 of the coupling units 10 of the pipeline element coupling piece 100 is aligned with the corresponding groove 201 of the first and second pipeline elements 210 and 220, wherein the engaging surface 121 of each of the engaging keys 12 has varying radiuses of curvature, wherein the gap 103 is defined between engaging surface 121 of each of the engaging keys 12 and the groove circumference 203 at the bottom of the groove 201 of the corresponding pipeline element 210 or 220.
(B) Operate on the fastening element 30 to fasten two fastening end portions of the coupling units 10 to reduce the gap 103 between the engaging surface 121 of each of the engaging keys 12 and the groove circumference 203 at the bottom of the groove 201 of the corresponding pipeline element 210 or 220, so as to retain the engaging keys 12 at the corresponding grooves 201, so that the pipeline element coupling piece 100 is firmly assembled with the first and second pipeline elements 210 and 220.

When assembling the enlarged coupling end portion 202 of the first pipeline element 210 in the first coupling end portion 100a of the pipeline element coupling piece 100, the operator may use his or her one or more fingers to press on the opposed second coupling end portion 100b of the pipeline element coupling piece 100 to prevent unwanted movement of the pipeline element coupling piece 100 and allow the enlarged coupling end portion 202 of the first pipeline element 210 to be sleeved in the gasket 40, so as to facilitate the assembling operation.

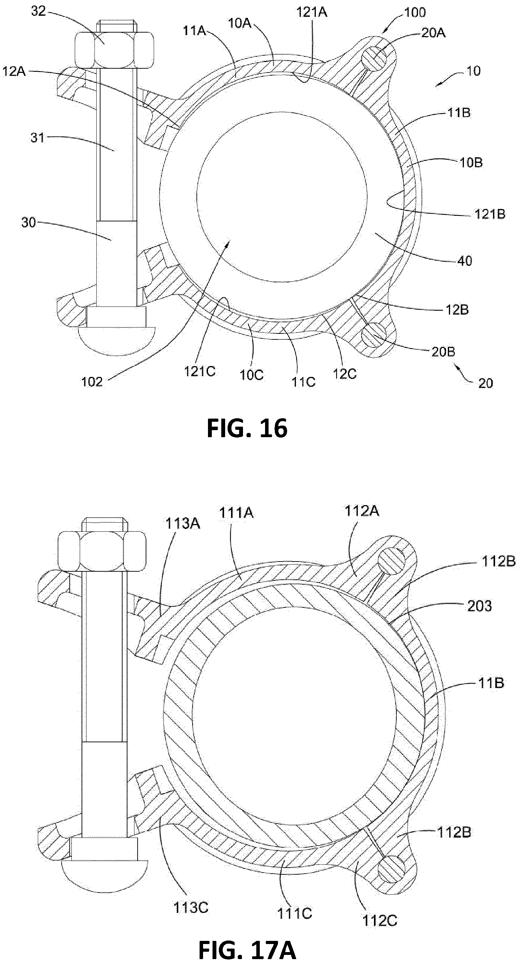

Referring to Fig. 16 to Fig. 19 of the drawings, a pipeline element coupling piece 100 of a pipeline connecting device according to a second preferred embodiment of the present invention is illustrated. The pipeline element coupling piece 100 comprises three coupling units 10, two pivotal connecting elements 20 pivotally connecting the three coupling units 10 for allowing the adjacent two coupling units 10 to pivotally move with respect to each other, a fastening element 30 for fastening the coupling units 10 after the pipeline element coupling piece 100 is installed on the two pipeline elements 200, and a gasket 40 disposed in the three coupling units 10.

Accordingly, in this preferred embodiment, the three coupling units 10 can be coupled with each other to form a substantially loop structure defining an inner cavity. More specifically, the three coupling units 10 comprises a first coupling unit 10A, a second coupling unit 10B and a third coupling unit 10C. The two pivotal connecting elements 20 comprises a first pivotal connecting element 20A and a second pivotal connecting element 20B. The first pivotal connecting element 20A is provided for pivotally connecting the second coupling unit 10B with the and the first coupling unit 10A, the second pivotal connecting element 20B is provided for pivotally connecting the second coupling unit 10B with the and the third coupling unit 10C. The fastening element 30 is preassembled with the first and third coupling units 10A and 10C for fastening the first and third coupling units 10A and 10C. The gasket 40 is disposed in the inner cavity 101 formed by the three coupling units 10 for providing a sealing effect when the two pipeline elements 200 are assembled with the pipeline element coupling piece 100.

Similarly, the first coupling unit 10A comprises a housing body 11A and two engaging keys 12A integrally and inwardly extended from the housing body 11A at two end portions thereof, the first coupling unit 10B comprises a housing body 11B and two engaging keys 12B integrally and inwardly extended from the housing body 11B at two end portions thereof, the third coupling unit 10C comprises a housing body 11C and two engaging keys 12C integrally and inwardly extended from the housing body 11C at two end portions thereof.

Each of the two pipeline elements 200 has a groove 201 adjacent to an enlarged coupling end portion 202 thereof for engaging with the corresponding engaging keys 12A, 12B and 12C of the three coupling units 10.

Accordingly, there is an opening 102 defined between the three engaging keys 12A, 12B an 12C of the three coupling units 10 at each of the two end portions thereof that it is big enough for the corresponding enlarged coupling end portion 202 of one of the two pipeline elements 200 to pass therethrough, so that the whole pipeline element coupling piece 100 can be directly installed on the two pipeline elements 200 without requiring to disassemble the gasket 40 and the fastening element 30.

According to this preferred embodiment of the present invention, the engaging keys 12A, 12B and 12C of the coupling units 10 have engaging surfaces 121A, 121B, and 121C which have varying radiuses of curvature, each of the pipeline elements 200 has a groove circumference 203 at a bottom of the corresponding groove 201. When the pipeline element coupling piece 100 of the present invention is preassembled on the pipeline elements 200 to align the engaging keys 12A, 12B and 12C with the corresponding grooves 201, the fastening element 30 is operated to firmly fasten the first and third sections 10A and 10C in such a manner that the engaging surfaces 121A, 121B and 121C are deformed and a part of or all of the engaging surfaces 121A, 121B and 121C are attached on the corresponding groove circumference 203.

In other words, each of the engaging surfaces 121A, 121B and 121C of each of the engaging keys 12A, 12B and 12C of the coupling units 10 does not have a fixed radius of curvature, and thus each of the engaging surfaces 121A, 12B and 121C is not a circular surface with a round curvature. The groove circumference 203 of each of the pipeline elements 200 has a substantially round curvature. When the pipeline element coupling piece 100 of the present invention is preassembled on the pipeline elements 200 to align the engaging keys 12A, 12B and 12C with the corresponding grooves 201, a gap 103A, 103B, 103C is formed between each engaging surface 121A, 121B, 121C and the corresponding groove circumference 203 of each of the pipeline elements 200. And then when the fastening element 30 is operated, the gap 103A, 103B, 10C is reduced until each of the engaging surfaces 121A, 121B, 121C is retained at a position that the firmly and stably coupling between the pipeline elements 200 with the pipeline element coupling piece 100 is achieved.

According to this preferred embodiment, each of the engaging surfaces 121A, 121B and 121C defines a curve of variable radiuses of curvature which can be but not limited to a logarithmic spiral curve, an archimedes spiral curve, a pascal spiral curve, an ellipse curve, a high power curve and a combination thereof. Accordingly, each of the engaging surfaces 121 does not have a round curvature and thus the gaps 103A, 103B, and 103C are created when each of the engaging keys 12A, 12B and 12C of the pipeline element coupling piece 100 of the present invention is preassembled in the corresponding grooves 201 of the pipeline elements 200.

More specifically, the housing body 11A of the first coupling unit 10A comprises a body portion 111A, a pivot connecting end portion 112A and a fastening end portion 113A, the housing body 11B of the second coupling unit 10B comprises a body portion 111B, two pivot connecting end portions 112B, the housing body 11C of the third coupling unit 10C comprises a body portion 111C, a pivot connecting end portion 112C and a fastening end portion 113C. The pivotal connecting element 20A and 20B pivotally connecting the pivot connecting end portions 112B with the corresponding pivot connecting end portions 112A of the housing bodies 11A and 11C. The fastening element 30 is mounted to the two fastening end portions 113A and 113C of the housing bodies 11A and 11C for firmly fastening the coupling units 10A, 10B and 10C with each other.

When in the preassembled state, the wo fastening end portions 113A and 113C of the housing bodies 11A and 11C can be spaced apart from each other, and a size of the opening 102 formed between the engaging surfaces 121A, 121B and 121C of the three engaging keys 12A, 12B and 13C is larger than a diameter of the enlarged coupling end portion 202 of each of the two pipeline elements 200, and thus the pipeline element coupling piece 100 can be mounted on the pipeline elements 200 by sleeving on the enlarged coupling end portion 202 of each of the pipeline elements 200. In other word, the enlarged coupling end portion 202 of each of the pipeline elements 200 is able to be inserted into the pipeline element coupling piece 100 by passing through the opening 102 between the three engaging surfaces 121A, 121B and 121C.

Referring to Fig. 17A of the drawings, before installation, the bolt 31 is assembled with the two fastening end portions 113A and 113C and the nut 32 is assembled on the bolt 31. And when the pipeline element coupling piece 100 is able to be installed with the pipeline elements 200, the gasket 40 is not required to be detached from the housing bodies 11A and 11C, the bolt 31 and nut 32 are not required to be removed from the two fastening end portions 113A and 113C.

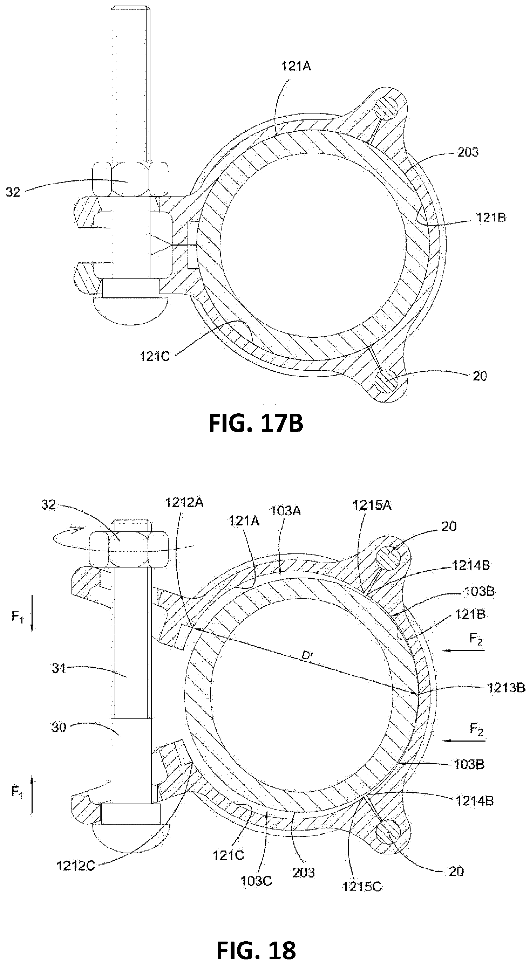

In other words, two pairs of the tongues each comprises the engaging keys 12A, 12B and 12C form two openings 102 at the two engaging ends of the pipeline element coupling piece 100. Furthermore, the first and third coupling units 10A and 10C are preferred to be constructed to have a same structure. When the bolt 31 and the nut 32 of the fastening element 30 are operated, both of the two pairs of engaging surfaces 12A, 12B and 12C at the two engaging ends thereof are deformed so as to direct the engaging surfaces 121A, 121B and 121C to have contact with the groove circumferences 203 of the pipeline elements 200, as shown in Fig. 17B of the drawings.

As a typical example of this preferred embodiment of the present invention, each of the engaging surfaces 121A, 121C defines a logarithmic spiral curve, in other words, a cross section of each of the engaging surfaces 121A and 121C forms a curve which is a logarithmic spiral curve. The engaging surface 121B of the second coupling unit 10B defines an ellipse curve. When the pipeline element coupling piece 100 is operated from the preassembled state to the final assembled state, the deformation of each of the engaging surfaces 121A, 121B and 121C results in deformed and varied radiuses of curvature thereof, and the variation range thereof is about 13% to 21%. A parameter D' denotes a distance between a middle point 1213B at a middle of the engaging surface 121B and a distal end point 1212A or 1212C , during the tight fastening process of the pipeline element coupling piece 100, the value of parameter D' is gradually reduced, and the variation range of the parameter D' is about 14% to 22%.

Referring to Fig. 18 of the drawings, according to this preferred embodiment, the middle point 1213B at the middle of the engaging surface 121B has a smallest radius of curvature that is equal to or slightly larger than (not larger than 5%) the radius of curvature of the groove circumference 203 of each pipeline element 200. In other words, the smallest radius of curvature at the middle point 1213B at the middle of the engaging surface 121B is substantially the same as the radius of curvature of the groove circumference 203 of each pipeline element 200. Therefore, when the pipeline element coupling piece 100 is preassembled with the pipeline elements 200, the surface at the middle point 1213B is attached on the corresponding groove circumference 203. Accordingly, two gaps 103B are formed between the engaging surface 121B and the corresponding groove circumference 103B.

The distal end point 1212A or 1212C adjacent to the fastening end portion 113A or 113C has a largest radius of curvature that can be substantially the radius of curvature of the enlarged coupling end portion 202 of each pipeline element 200. Therefore, since the fastening end portions 113A and 113C can be slightly apart from each other when the pipeline element 100 is in the preassembled state, the opening 102 defined between the pair of engaging surfaces 121A, 121B and 123C is big enough for the pipeline element coupling piece 100 to be directly sleeved on the pipeline elements 200 so as to preassemble the pipeline element coupling piece 100 with the pipeline elements 200.

Accordingly, as a preferred example, radiuses of curvatures of the engaging surfaces 121A, 121B and 121C according to this preferred embodiment of the present invention are preferred to be gradually increased from the middle point 1213B to the distal end points 1212A and 1212C.

Referring to Fig. 17B of the drawings, when the fastening element 30 is operated to firmly retain the engaging keys 12A, 12B and 12C at the grooves 201, the gaps 103A, 103B and 103C between the engaging surfaces 121A, 121B and 121C and the groove circumference 203 are reduced, each of the engaging surfaces 121A, 121B and 121C is deformed to change its radiuses of curvatures along its circumferential direction to have contact with the groove circumference 203. Each of the deformed engaging surfaces has a substantially round curvature for matching with the radius of curvature of the corresponding groove circumference 203 of each of the pipeline elements 200.

When the nut 32 is screwed to move along the bolt 31, a distance between the two fastening end portions 113A and 113C is reduced, the gaps 103A, 103B and 103C are reduced, so that each of the engaging surfaces 121A, 121B and 121C tends to be moved to a position that it is having contact with the groove circumference 203. When in the assembled state, a perimeter of the pair of engaging surfaces 121A, 121B and 121C is substantially equal to or slightly larger than a perimeter of the corresponding groove circumference 203, the pair of engaging surfaces 121A, 121B and 121C form a substantially circular surface having a substantially round curvature matching with the curvature of the corresponding groove circumference 203.

Referring to Fig. 18 of the drawings, when the nut 32 is being rotated to generate a torque, Forces F1 are created along the bolt 31 by the torque, because of existence of the middle point 1213B, Forces F2 are being generated to result in the deformation of the engaging surfaces 121B of the coupling units 10B and also may result in a slight deformation of the engaging surfaces 121A and 121C, the radius of curvature at each of the two end points 1214B of the engaging surface 121B is reduce to be substantial equal to the radius of curvature at the middle point 1213B of the engaging surface 121B which substantially has no deformation during the assembling process. When the torque is gradually increased, the deformation of the coupling units 10A and 10C becomes more apparent, and the deformation is finished until the torque reaches to a predetermined value. The radiuses of curvature at the distal end points 1212A and 1212C have the largest varying ranges, and are reduced to match the radius of curvature of the corresponding groove circumference 203.

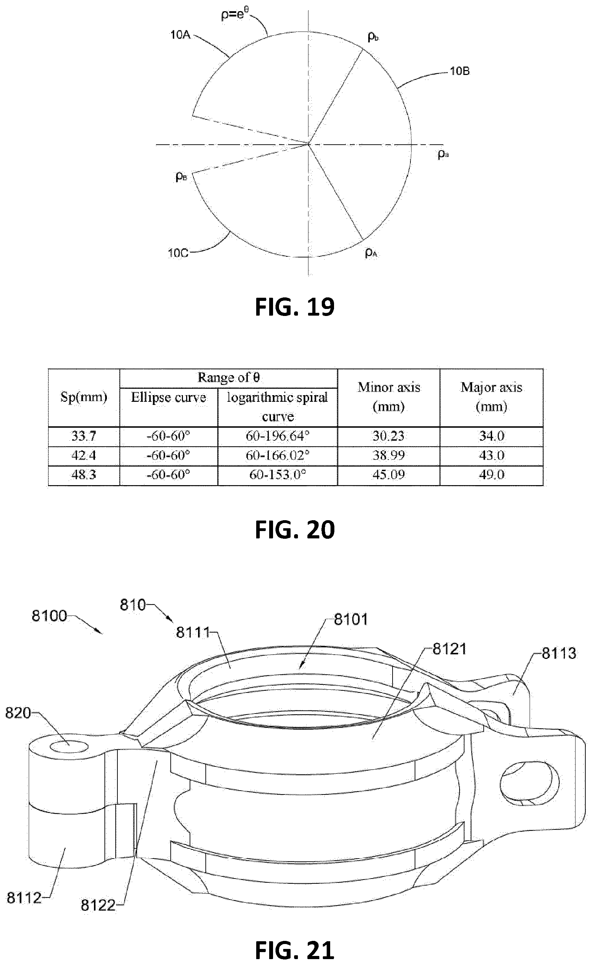

Referring to Fig. 19 of the drawings, according to a specific example of this preferred embodiment of the present invention, each of the engaging surfaces 121A and 12C defines a logarithmic spiral curve having an equation of ρ=e^{θ}, wherein θ has a range of 60∼200°. The engaging surface 121B defines an ellipse curve and a value of a minor axis of the ellipse curve Da is the diameter D1 of the groove circumference 203 of the corresponding pipeline element 200, a value of a major axis Db of the ellipse curve is a value of the specification Sp of the pipeline elements plus an allowance R' which has a value range of 0.3-1mm.

More specifically, Fig. 20 illustrates different ranges of θ and values of Da and Db for different specifications of the two pipeline elements 200 which are coupled with each other by the pipeline element coupling piece 100.

According to this preferred embodiment, parameter ρₐ denotes the radius of curvature at the middle point 1213B of the engaging surface 121B, ρ_{b} denotes the radius of curvature at each of the two end points 1214B of the engaging surface 121B (θ is 60°), ρ_{A} denotes the radius of curvature at each of the proximate end points 1215A and 1215C of the engaging surfaces 121A and 121C, ρ_{B} denotes the radius of curvature at each of the distal end points 1212A and 1212C of the engaging surface 121A and 121C, D1 denotes the diameter of the groove circumference 203 of each of the pipeline elements 200, D2 denotes the diameter of the enlarged coupling end portion 202 of each of the pipeline elements 200. Accordingly, ρₐ=D1/2, ρ_{b}=(Sp+R')/2, ρ_{A}=ρ_{b}, and ρ_{B}=D2/2, the radiuses of curvature at the transition points 1214B, 1215A and 1215C are substantially the same.

As a specific example, when the specification of the pipeline element coupling piece 100 is 42.4mm, the diameter D1 of the groove circumference 203 of each of the pipeline elements 200 is 38.99mm, the diameter D2 of the enlarged coupling end portion 202 of each of the pipeline elements 200 is 45mm, and R' is 0.6mm, then ρₐ=38.99/2=19.495mm, ρ_{A}=ρ_{b}=20.941mm, ρ_{B} =45.5/2=22.5mm.

Accordingly, the preferred embodiment further provides a method of coupling two pipeline elements 200 with the pipeline element coupling piece 100, and the method comprises the following steps:
(α) Preassemble the pipeline element coupling piece 100 on the two pipeline elements in such a manner that the engaging keys 12A, 12B and 12C of the coupling units 10 are respectively aligned with the corresponding groove 201 of the pipeline elements 200 and define gaps 103A, 103B and 103C therebetween, wherein each of the engaging surface 121A, 121B and 121C has varying radiuses of curvature.
(β) Assemble the engaging keys 12A, 12B and 12C into the corresponding groove 201 of the pipeline elements 200 by operating on the fastening element to reduce the gaps 103A, 103B and 103C, so as to match the radius of curvature of the groove circumference 203 of the corresponding pipeline element 200, so that the engaging surfaces 121A, 121B and 121C are substantially having contact with the groove circumference 203 of the corresponding pipeline element 200 when the pipeline element coupling piece 200 is in the assembled state.

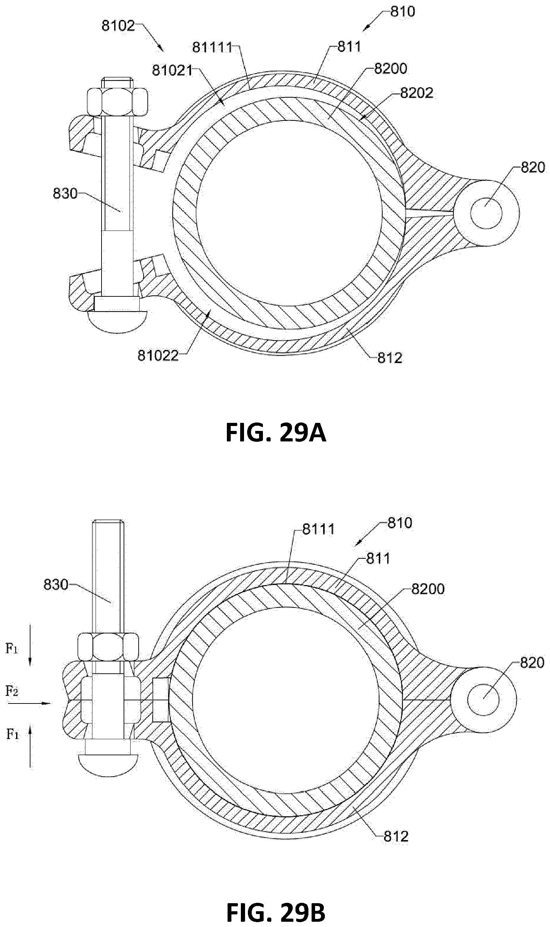

Referring to Figs. 21 to 29B, a pipeline element coupling piece 8100 of a pipeline connecting device for coupling two pipeline elements 8200 (including a first pipeline element 8210 and a second pipeline element 8220) according to a third preferred embodiment of the present invention is illustrated. The pipeline element coupling piece 8100 comprises at least two housings 810, at least one connecting element 820, and at least one fastening element 830, wherein each of the at least two housings 810 forms a ring like structure having an inner cavity 8101. As shown in Fig. 21, two ends of each of the housings 810 are connected with two ends of another housing 810 by the connecting element 820 and the fastening element 830 respectively, such that the two housings 810 are able to be opened and closed with respect to each other. The fastening element 830 is configured for fastening each of the housings 810 at an outer side of the pipeline element 8200, so as to achieve a reliable connection of the two pipeline elements 8200. Especially to the pipeline element having a taper shaped tubular end, an opening of engaging surfaces of the two housings 810 has a size allowing the housing 810 to be able to sleeve at the outer side of the pipeline element without any disassembling and rendering the engaging surface attaching at a bottom or a partial portion of the bottom of a groove 8201 of the pipeline element 8200.

It is understood that the pipeline element coupling piece 100 and the coupling unit 10 thereof of the above preferred embodiments are respectively embodied as the pipeline element coupling piece 8100 and the housing 810 in this third preferred embodiment.

It is understood that the pipeline element 8200 includes, but not limited to, pipeline, pipe fitting, device, and etc., wherein the pipe fitting can be elbow, value, tee or connector with larger or smaller head, or accessory for pipe fitting, etc.. Each of the pipeline elements 8200 comprises a groove end portion having a groove 8201. During installation, the engaging surface of the housing 810 of the pipeline element coupling piece 8100 is capable of attaching at a groove bottom 8202 of the groove 8201 of the pipeline element 8200. For example, the pipeline element coupling piece 8100 can be used for connecting two connecting pipeline (a first pipeline 8210 and a second pipeline 8220), or that the pipeline element coupling piece 8100 can be used for connecting a pipeline and a pipe fitting, or that the pipeline element coupling device can be used for connecting a pipe fitting and a device, or that the pipeline element coupling piece 8100 can be used for connecting two devices, or etc..

Furthermore, the engaging surface of the housing 810 is a curved surface with a variable radius of curvature. In other words, the engaging surfaces of the housings 810 (a first engaging surface 81111 and a second engaging surface 81211) define a non-circular opening therebetween before installation. After the housings 810 are sleeved at the pipeline element 8200, the engaging surfaces of the housings 810 (the first engaging surface 81111 and the second engaging surface 81211) couple with a groove 8201 of an outer side of the pipeline element 8200, wherein a gap 8102 is formed between the engaging surfaces (the first engaging surface 81111 and the second engaging surface 81211) of the housings 810 and the groove bottom 8202 of the groove 8201 of the pipeline element 8200. During installation, the gap 8102 allows the user to pre-adjust the relative positions of the pipeline element coupling piece 8100 and the pipeline element 8200 correspondingly, without a need of utilizing assistant tool to enlarge the radius of curvature of the pipeline element coupling piece 8100, thereby increasing the flexibility and reliability of manual installation.

Moreover, the fastening element 830 fastens the housings 810 at the outer side of the pipeline element 8200 through minimizing the gap 8102, that deforms the housings 810 by minimizing the opening defined between the engaging surfaces (the first engaging surface 81111 and the second engaging surface 81211) of the housings 810, until the engaging surfaces (the first engaging surface 81111 and the second engaging surface 81211) of the housings 810 partially attach or fully attached at the groove bottom 8202 of the groove 8201 on the outer side of the pipeline element 8200. That is a diameter size of the engaging surfaces (the first engaging surface 81111 and the second engaging surface 81211) of the housings 810 just match with a diameter size of the groove bottom 8202 of the groove 8201 of the pipeline element 8200, so as to minimize the gap to ensure a reliable connection effect.

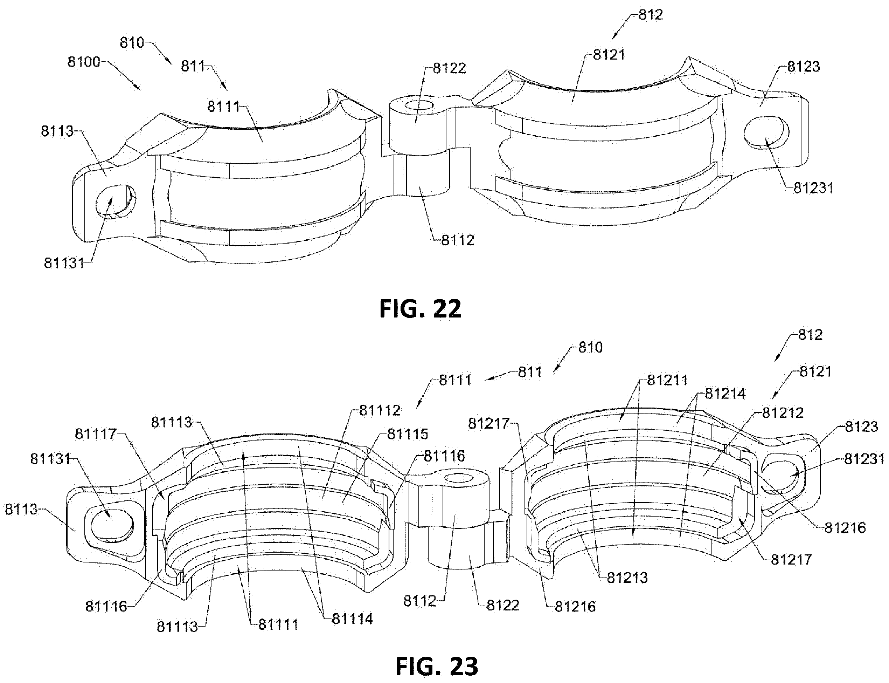

As shown in Figs. 22 and 23, preferably, according to this embodiment, at least two of the housings 810 are embodied as a first housing 811 and a second housing 812, wherein the first housing 811 includes a first body portion 8111, a first connecting end portion 8112 and a first fastening end portion 8113, and that the first connecting end portion 8112 is embodied as a first pivot connecting end portion 8112, wherein the first pivot connecting end portion 8112 and the first fastening end portion 8113 are integrally formed at two ends of the first body portion 8111 respectively. The second housing 812 includes a second body portion 8121, a second connecting end portion 8122 and a second fastening end portion 8123. Correspondingly, the second connecting end portion 8122 is embodied as a second pivot connecting end portion 8122, wherein the second pivot connecting end portion 8122 and the second fastening end portion 8123 are integrally formed at two ends of the second body portion 8121 respectively. Accordingly, the first housing 811 and the second housing 812 are connected pivotally through hinging the first and second pivot connecting end portions 8112, 8122. Therefore, the first housing 811 and the second housing 812 are no need to be assembled and installed individually so as to save installation time.

According to the first preferred embodiment, the first pivot connecting end portion 8112 and the second pivot connecting end portion 8122 are connected by the connecting element 820, wherein the first body portion 8111 and the second body portion 8121 are able to be rotated with respect to each other about the connecting element 820. The fastening element 830 is used for fastening the first fastening end portion 8113 and the second fastening end portion 8123, so as to adjust a size of the opening defined between the engaging surfaces (the first engaging surface 81111 and the second engaging surface 81211) of the housings 810. While a distance between the first fastening end portion 8113 and the second fastening end portion 8123 increasing or decreasing, the size of the opening defined between the engaging surfaces (the first engaging surface 81111 and the second engaging surface 81211) of the housings 810 increases or decreases correspondingly, and that when the first fastening end portion 8113 and the second fastening end portion 8123 are jointly connected and fastened, the size of the opening between the engaging surfaces (the first engaging surface 81111 and the second engaging surface 81211) of the housings 810 is minimized.

According to this preferred embodiment, the connecting element 820 is embodied as a hinge structure, wherein each of the first housing 811 and the second housing 812 is capable of rotating about the connecting element 820 within a predetermined angle, such that the opening defined between the first fastening end portion 8113 and the second fastening end portion 8123 is an adjustable opening. Through enlarging the opening, the opening between the engaging surfaces (the first engaging surface 81111 and the second engaging surface 81211) of the housings 810 is able to be opened up for a corresponding extend. Otherwise, through decreasing the opening, the size of the opening between the engaging surfaces (the first engaging surface 81111 and the second engaging surface 81211) of the housings 810 reduces correspondingly.

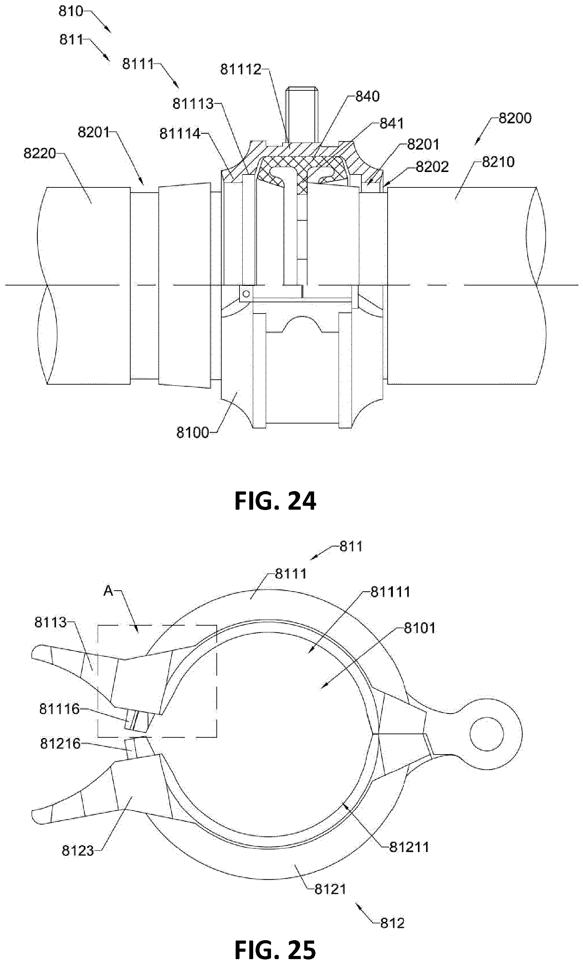

Referring to Fig. 24, preferably, the first body portion 8111 has two symmetrical and parallel first engaging surfaces 81111 for fitting at the groove bottoms 8202 of the first pipeline element 8210 and the second pipeline element 8220 respectively, wherein the second body portion 8121 has two symmetrical and parallel second engaging surfaces 81211 for fitting at the groove bottoms 8202 of the first pipeline element 8210 and the second pipeline element 8220 respectively. Each of the first engaging surface 81111 and the second engaging surface 81211 is a curve surface with variable radius of curvature, that is both the first engaging surface 81111 and the second engaging surface 81211 have a curved shape with variable radius of curvature. Generally, the first fastening end portion 8113 and the second fastening end portion 8123 are unconnected with each other, such that the opening defined between the engaging surfaces (the first engaging surface 81111 and the second engaging surface 81211) of the housings 810 has a non-circular shape and a size larger than the diameter size of the taper opening of the pipeline element 8200. The user can fasten the fastening element 830 by connecting the first fastening end portion 8113 and the second fastening end portion 8123 with a tool, wherein both the first body portion 8111 and the second body portion 8121 deform by decreasing the opening between the first and second engaging surfaces 81111 and 81211, until the size of the opening between the first and second engaging surfaces 81111 and 81211 is minimized.

It is worth mentioning that the first engaging surface 81111 is capable of extending along a portion of an inner surface or a side edge of a first connecting key 81114 of the first body portion 8111, and that the second engaging surface 81211 is capable of extending along a portion of an inner surface or a side edge of a second connecting key 81214 of the second body portion 8121. During installation, both the inner surfaces of the first and second connecting keys 81114 and 81214 of the first and second body portions 8111, 8121 fit and attach with the groove bottom 8202 of the groove 8201 of the pipeline element 8200, such that the first engaging surface 81111 and the second engaging surface 81211 are both, but not limited to be, fitted and attached on the groove bottom 8202 of the groove 8201 of the pipeline element 8200.

According to this preferred embodiment, the outer side of each of the first pipeline element 8210 and the second pipeline element 8220 is provided with the groove 8201, wherein first engaging surface 81111 and the second engaging surface 8111 are configured to fittingly attach on the groove bottom 8202 of the groove 8201 correspondingly, so as to achieve a reliable installation.

Furthermore, both the first engaging surface 81111 and the second engaging surface 81211 have the same radius of curvature at a position of the connecting element 820, and a radius of curvature of such position also equal to the radius of curvature of the groove bottom 8202 of the groove 8201 of the pipeline element 8200, so that the first and second engaging surfaces 81111 and 81211 of the first pivot connecting end portion 8112 and the second pivot connecting end portion 8122 can fitting attach on the groove bottom 8202 of the pipeline element 8200 during pre-sleeving installation.

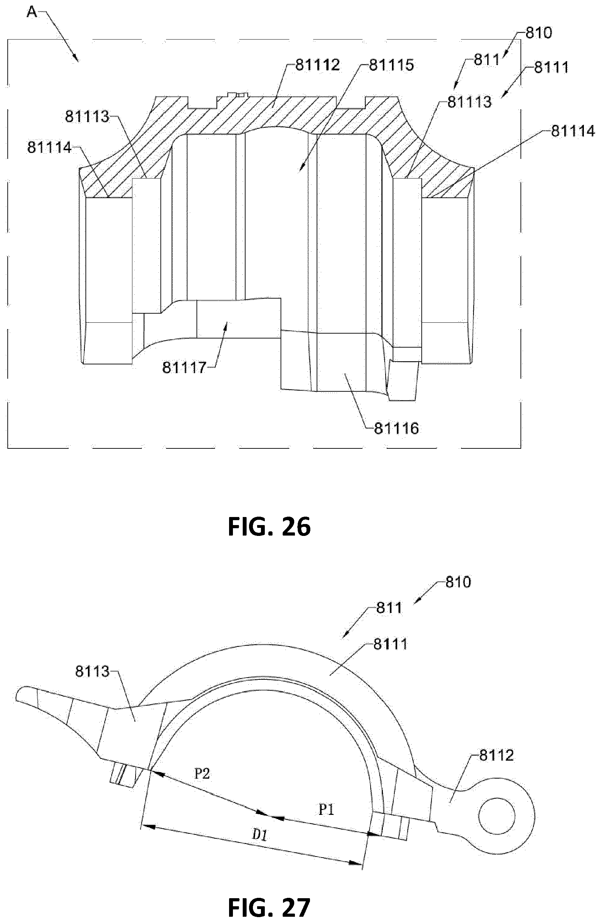

Referring to Fig. 27, the first engaging surface 81111 gradually increases its radius of curvature from the position of the first pivot connecting end portion 8112 to the position of the first fastening end portion 8113, wherein the first engaging surface 81111 has a smallest radius of curvature P1, substantially equal to the radius of curvature of the groove bottom 8202 of the pipeline element 8200, at the position of the first pivot connecting end portion 8112, and that the first engaging surface 81111 has a largest radius of curvature P2, substantially larger than the radius of curvature of the groove bottom 8202 of the pipeline element 8200, at the position of the first fastening end portion 8113, such that, under natural condition, the size of the opening between the two engaging surfaces (the first engaging surface 81111 and the second engaging surface 81211) of the two housings 810 is larger than a diameter of a taper opening portion of the pipeline element 8200. Correspondingly, the second engaging surface 81211 gradually increases its radius of curvature from the position of the second pivot connecting end portion 8122 to the position of the second fastening end portion 8123, wherein the second engaging surface 81211 has a smallest radius of curvature P1, substantially equal to the radius of curvature of the groove bottom 8202 of the pipeline element 8200, at the position of the second pivot connecting end portion 8122, and that the second engaging surface 81211 has a largest radius of curvature P2, substantially larger than the radius of curvature of the groove bottom 8202 of the pipeline element 8200, at the position of the second fastening end portion 8123.

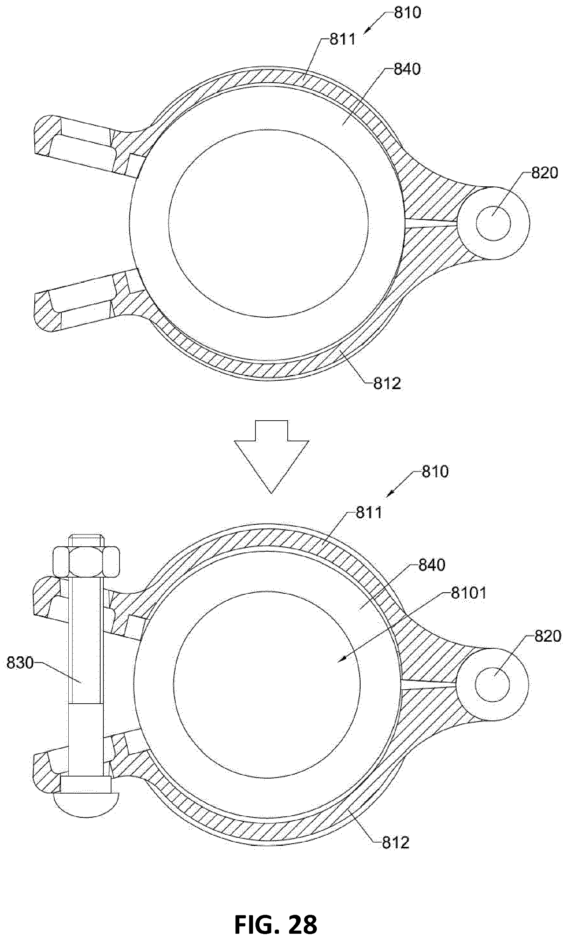

Referring to Fig. 28 and Fig. 29A, during the pre-sleeving process, the first body portion 8111 and the second body portion 8121 are operated to sleeve on the first pipeline element 8201 and the second pipeline element 8202, or relatively rotated the first body portion 8111 and the second body portion 8121 through increasing the opening between the engaging surfaces (the first engaging surface 81111 and the second engaging surface 81211) of the housings 810 about the connecting element 820 so as to quickly insert the two pipeline elements 8200 coaxially at the opening between the engaging surfaces (the first engaging surface 81111 and the second engaging surface 81211) of the housings 810. Moreover, when the first pivot connecting end portion 8112 and the second pivot connecting end portion 8122 are both fitted and attached at the outer side of the pipeline elements 8200, a first gap 81021 is formed between the first engaging surface 81111 and the groove bottom 8202 of the pipeline element 8200, and a second gap 81022 is formed between the second engaging surface 81211 and the groove bottom 8202 of the pipeline element 8200, wherein the first gap 81021 gradually decreases from the first fastening end portion 8113 to the first pivot connecting end portion 8112, and the second gap 81022 gradually decreases from the second fastening end portion 8123 to the second pivot connecting end portion 8122.

As shown in Fig. 25, in other words, when the pipeline element coupling piece 8100 is pre-sleeved at the outer sides of the pipeline elements 8200, there is a predetermined clearance formed between the first fastening end portion 8113 and the second fastening end portion 8123, that is the first fastening end portion 8113 and the second fastening end portion 8123 are not in contact with each other.

It is worth mentioning that the housings 810 are made of metal material, such as low carbon steel material or plastic steel material that can't be deformed by manpower. However, after the pipeline element coupling piece 8100 is pre-sleeved around the pipeline element(s) 8200, the pipeline element 8200 forms a pivot point and the user may fasten the fastening element 830 to pull the first fastening end portion 8113 and the second fastening end portion 8123 towards each other by a tool, so as to make the engaging surfaces 81111 and 81211 of the first body portion 8111 and the second body portion 8121 deforming to partially or fully attach and retain at the groove bottom 8202 of the pipeline element 8200.

Preferably, the fastening element 830 is embodied as a bolt and nut arrangement, that is the fastening element 830 includes a bolt 831 and a nut 832, wherein the bolt 831 and the nut 832 are paired and matched for screwing connection with each other and the tool to be used can be implemented, but not limited to, as a wrench and the like for fastening the fastening element 830. It is worth mentioning that, since the radius of curvature of the engaging surface of the housing 810 at the position of the fastening element 830 is apparently larger than the tubular size of the pipeline element 8200, the fastening element 830 has no need to be detached and disassembled during installation. That is after the installation, the fastening element 830 can be retained at housings 810, so that a disassemble step of the fastening element 830 by the user is eliminated so as to save installation time.

In particular, the first fastening end portion 8113 of the first housing 811 has a first fastening hole 81131 and the second fastening end portion 8123 of the second housing 812 has a second fastening hole 81231, wherein the sizes and directions of the first fastening holes 81131 and the second fastening hole 81231 are implemented matching with each other for detachably fastening. In other words, the first fastening hole 81131 and the second fastening hole 81231 are configured for the bolt 831 of the fastening element 830 to pass through and that the nut 832 is configured to screw and fasten with the bolt 831 so as to gradually reduce a distance between the first fastening end portion 8113 of the first housing 811 and the second fastening end portion 8123 of the second housing 812, so as to render the engaging surfaces 8111 and 81211 to deform while the first body portion 8111 and the second body portion 8121 are moving towards each other.

As shown in Fig. 29B, during installation, while the fastening element 830 is gradually screwing and being tightened, the torque of the bolt 831 increases gradually and the deforming of the first fastening end portion 8113 and the second fastening end portion 8123 becomes more apparent, such that the gap 8102 gradually decreases until the fastening element 830 is completely fastened that the bolt 831 reaches a specific torque value and the gap 8102 is minimized, thereby the installation is completed.

Preferably, a sum of the perimeters of the first engaging surface 81111 and the second engaging surface 81211 is substantially equal to a circumference of the groove bottom 8202 of the groove 8201 of the pipeline element 8200, so that a rigid coupling is achieved. When the user uses the tool to fasten the fastening element 830 until the first body portion 811 and the second body portion 8121 deform to contact with the pipeline element 8200, the first engaging surface 81111 and the second engaging surface 81211 substantially partially or fully attached on the groove bottom 8202 of the pipeline element 8200, wherein the opening between the engaging surfaces (the first engaging surface 81111 and the second engaging surface 81211) of the housings 810 has the same circumference and diameter of the groove bottom 8202 of the pipeline element 8200, so as to ensure the reliability of connection. In order to ensure the reliability of connection, optionally, the sum of the perimeters of the first engaging surface 81111 and the second engaging surface 81211 is larger than the diameter and circumference of the groove bottom 8202 of the groove 8201 o the pipeline element 8200. Also, after installation, a small gap is left between the engaging surfaces (the first engaging surface 81111 and the second engaging surface 81211) of the housings 810 and the groove bottom 8202 of the groove 8201 of the pipeline element 8200, so as to achieve a flexible coupling or pseudoflexible connection. Or that, after the pipeline element coupling piece 8100 is installed, the engaging surfaces of the pipeline element coupling piece 8100 can be fully attached and contacted with the groove bottom 8202 of the pipeline element 8200 to ensure a rigid connection between the pipeline element coupling piece 8100 and the pipeline element 8200, or partially attached at the groove bottom 8202 of the pipeline element 8200 while leaving a small gap therebetween so as to ensure a flexible connection between the pipeline element coupling piece 8100 and the pipeline element 8200, wherein the above description is not intended to limit the scope of the present invention.

According to this preferred embodiment, the first engaging surface 81111 and the second engaging surface 81211 are both embodied as a curvilinear surface with variable radius of curvature, which is embodied as section line (the line parallel with the side line), side line and section line at any point forming a shaped surface with variable radius of curvature, wherein the radius of curvature of the curve with variable radius of curvature is not a fixed value but gradually increases from a minimum value to a maximum value. Further, the minimum value of the radius of curvature of the curve with variable radius of curvature is equal to the radius of curvature of the pipeline element. In other words, the radius of curvature P1, that is the minimum value, at the position of the first pivot connecting end portion 8112 or the position of the second pivot connecting end portion 8122 is substantially equal to the tubular radius (radius of curvature) of the groove bottom 8202 of the groove 8201 of the pipeline element 8200, and that the radius of curvature P2 at the position of the first fastening end portion 8113 or the position of the second fastening end portion 8123 is the maximum value.

Selectively, the radius of curvature P1 of the curve with variable radius of curvature at the position of the first pivot connecting end portion 8112 or the second pivot connecting end portion 8122 may be slightly larger than a radius of curvature of the groove bottom 8202 of the groove 8201 of the pipeline element 8200, wherein radius of curvature P1is slightly larger than the radius of curvature of the groove bottom 8202 of the groove 8201 of the pipeline element 8200 within 5%, but it is not intended to limit the scope of the invention.

It is understood that the curve with variable radius of curvature of the curve surface of variable radius of curvature includes, but not limited to, one of or a combination of logarithmic spiral curve, Archimedes spiral curve, pascal spiral curve, ellipse curve, high power curve, and etc.. Preferably, the curves with variable radius of curvature of the first engaging surface 81111 and the second engaging surface 81211 are embodied as logarithmic spiral curve, and the radius of curvature P1 at the pivot connecting end portion 8112, 82122 is smaller than the radius of curvature P2 at the fastening end portion 8113, 8123.

Referring to Figs. 23 and 24, further, the first main body 8111 of the first housing 811 includes a first housing base 81112, two first housing shoulders 81113 and two first engaging keys 81114, wherein the first housing base 81112, the two first housing shoulders 81113 and the two first engaging keys 81114 are integrally made as a groove structure, wherein the first pivot connecting end portion 8112 and the first fastening end portion 8113 are integrally formed at two sides of the first housing base 81112 respectively, wherein the first engaging key 81114 is integrally formed at the first housing shoulder 81113, wherein a first installation groove 81115 is formed between the two first housing shoulders 81113 as well as the two first engaging keys 81114, wherein the surface of the first engaging key 81114 configured to be in contact with the groove bottom 8202 of the groove 8201 of the pipeline element 8200 is the first engaging surface 81111, wherein the first engaging key 81114 is matchingly coupled with the groove 8201 of the pipeline element 8200.

Correspondingly, the second main body 8121 of the second housing 812 includes a second housing base 81212, two second housing shoulders 81213 and two second engaging keys 81214, wherein the two second housing shoulders 81213 are integrally formed at two sides of the second housing base 81212, wherein the second engaging key 81214 is integrally formed at the second housing shoulder 81213, wherein a second installation groove 81115 is formed between the two second housing shoulders 81213 as well as the two second engaging keys 81214, wherein the surface of the second engaging key 81214 configured to be in contact with the groove bottom 8202 of the groove 8201 of the pipeline element 8200 is the second engaging surface 81211, wherein the second engaging key 81214 is matchingly coupled with the groove 8201 of the pipeline element 8200, so as to equipped correspondingly with the first engaging key 81114 to achieve the coupling with the first pipeline element 8210 and the second pipeline element 8220.

It is worth mentioning that the first housing base 81112, the first housing shoulders 81113, the second housing base 81212 or the second housing shoulders 81213 may be embodied as a curve structure with variable radius of curvature. That is the first housing base 81112, the first housing shoulders 81113, the second housing base 81212 or the second housing shoulders 81213 also have a curve shape with variable radius of curvature. Or that, each of the first housing base 81112, the first housing shoulders 81113, the second housing base 81212 or the second housing shoulders 81213 is portionly or completely embodied as curved shape structure, which is not intended to limit the scope of the invention.

In other words, the surfaces of the engaging keys (the first engaging key 81114 and the second engaging key 81214) that are in contact with the groove bottom 8202 are the engaging surfaces (the first engaging surface 81111 and the second engaging surface 81211), wherein, the engaging surfaces are curve surfaces with radiuses of curvature. Or that is to say a sectional line (the line parallel to the edge line), an edge line and a sectional line of any point of each of the engaging surfaces is a curve with variable radius of curvature, or that a sectional line (the line parallel to the edge line), an edge line and a sectional line of any point of each of the engaging keys is a curve with variable radius of curvature.

According to this preferred embodiment, from the initial condition to the completely installed condition of the pipeline element coupling piece 8100, the first engaging surface 81111 of the first engaging key 81114 of the first housing 811 of the housing 810 and the second engaging surface 81211 of the second engaging key 81213 of the second housing 812 of the housing 810 has a variable radius of curvature ranged between 4.5% to 15%, wherein a varying range of an opening value D1 of the opening between the first pivot connecting end portion 8112 and the first fastening end portion 8113 of the first housing 811 of the housing 810 is between 4% to 15%, while a varying range of an opening value D1 of the opening between the second pivot connecting end portion 8122 and the second fastening end portion 8123 of the second housing 812 of the housing 810 is between 4% to 15%, these example values are not intended to limit the scope of the invention.

Referring to Fig. 26, preferably, a first sealing end 81116 and a first sealing groove 81117 are formed at two ends of the first housing base 81112 respectively, while a second sealing end 81216 and a second sealing groove 81217 are formed at two ends of the second housing base 81212 respectively, wherein the first sealing end 81116 is fittingly and insertingly coupled with the second sealing groove 81217 and second sealing end 81216 is fittingly and insertingly coupled with the first sealing groove 81117, so as to further seal the opening between the first housing 811 and the second housing 812 to enhance the coupling reliability of the pipeline element coupling piece 8100.

Furthermore, the pipeline element coupling piece 8100 further comprises a sealing gasket 840, wherein the gasket 840 is embodied as a ring shape structure, having an outer diameter slightly larger than the pipeline element 8200, a predetermined toughness and a predetermined deformability. The gasket 840 is arranged in the installation groove 81115 and the second installation groove 81215 of an inner cavity 8101 of the housing 810, such that, during installation, the gasket 840 is pressed and sleeved in the housing 810.

Furthermore, in order to facilitate the installation of the first pipeline element 8210 and the second pipeline element 82220, a middle portion of the gasket 840 has a retainer 841 inwardly extended. During installation, the retainer 841 is configured for retaining the first pipeline element 8210 and the second pipeline element 8220 at preferred docking positions so as to prevent any coupling failure of the first pipeline element 8210 and the second pipeline element 8220, wherein the retainer 841 is positioned between the first pipeline element 8210 and the second pipeline element 8220 without blocking a communication between the first pipeline element 8210 and the second pipeline element 8220.

It is worth mentioning that, since the size of the opening between the engaging surfaces (the first engaging surface 81111 and the second engaging surface 81211) of the housing 810 is larger than the diameter size of the taper opening of the pipeline element, during installation, the gasket 840 is retained the first installation groove 81115 and the second installation groove 81215 of the housing 810. At the same time, the gasket 830 is also retained in the housing 810 that, after installation, the fastening element 830 and the gasket 840 have no need to be detached or disassembled. Therefore, during pre-sleeving, the housing 810 and the gasket 840 can together be sleeved at the outer side of the pipeline element 8200 without the need to detach or disassemble the gasket 840 and to install the gasket 840 and the housing 810 one after one, so as to reduce the steps of installation and enhance the installation speed. Also, the relative positions of the housing 810 and the gasket 840 are maintained and almost have no change at all, that avoids dislocation and lowers the technical requirement to the installation workers.

According to this preferred embodiment, the invention further provides an installation method of the pipeline element coupling device 9100, including the following steps:
(A) sleeving the at least two housing 810 at the outer sides of two pipeline elements 8200 to be connecting, wherein the engaging surfaces (the first engaging surface 81111 and the second engaging surface 81211) of the first engaging key 81114 and the second engaging key 81214 of the housing 810 are curve surfaces with variable radius of curvature configured with the groove bottom 8202 of the groove 8201 of the pipeline element 8200 to form a gap 8102 therebetween; and
(B) deforming the engaging surfaces (the first engaging surface 81111 and the second engaging surface 81211) of the engaging keys (the first engaging key 81114 and the second engaging key 81214) through narrowing the gap 8102 and partially or fully fitting and attaching at the groove bottom 8202 of the groove 8201 of the corresponding pipeline element 8200.

Furthermore, the step (A) further comprises the following steps:
(A1) sleeving the at least two housings 810 at the outer side of the first pipeline element 8210, wherein the first pipeline element 8210 is retained to a predetermined position by the retainer 841 of the gasket 840, wherein the first engaging key 81114 and the second engaging key 81214 provided at one side of the housing 810 are engaged in the groove 8201 of the first pipeline element 8210; and
(A2) inserting the second pipeline element 8220 into the inner cavity 8101 defined between the at least two housings 810, wherein the second pipeline element 8220 is retained to a predetermined position by the retainer 841 of the gasket 840, wherein the first engaging key 81114 and the second engaging key 81214 at the other side of the at least two housing 810 are engaged with the groove 8201 of the second pipeline element 8220.

Furthermore, in the step (B), the first engaging key 81114 and the second engaging key 81214 are deformed by tightening the fastening element 830 to a reasonable torque value.

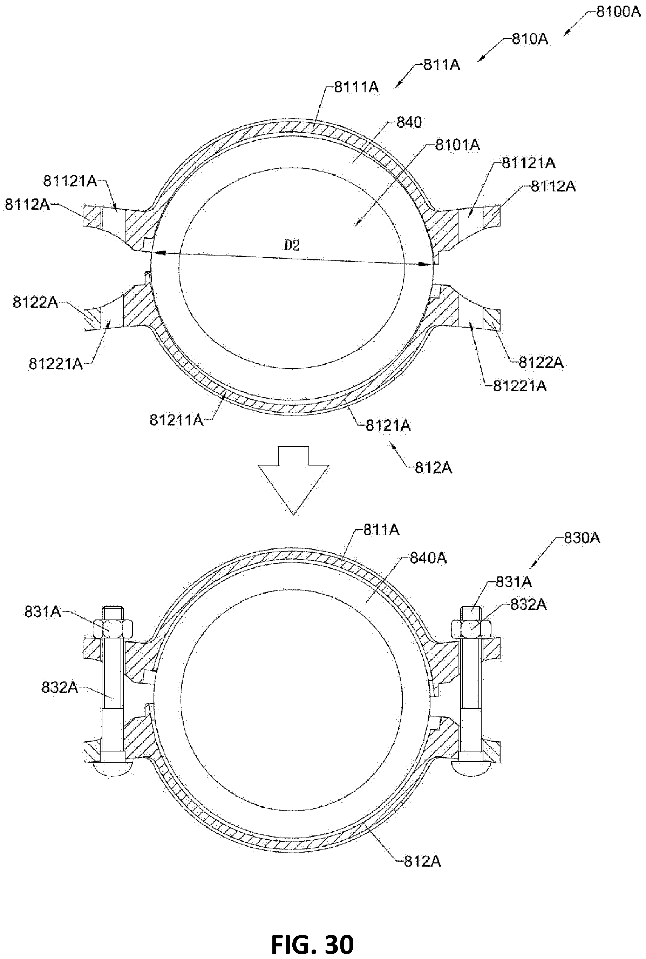

Referring to Fig. 30 to Fig. 34, a pipeline element coupling piece 8100A according to a first alternative mode of the above preferred embodiment of the invention is illustrated, which is not within the scope of the claims and is different to the above preferred embodiment in that the pipeline element coupling piece 8100A comprises two housings 810A and two fastening elements 830A, wherein the two housings 810A are able to be configured correspondingly to form an inner cavity 8101A with adjustable size, wherein the engaging surfaces of the two housings 810A are engaged with a groove 8201 of the pipeline element 8200, wherein an opening defined between the engaging surfaces of the housing 810A is adjustable in size and larger than a diameter size of the pipeline element 8200, wherein two ends of the two housings 810A are fastened together by the fastening elements 830A respectively so as to achieve a sealingly coupling of the two pipeline elements 8200.

Further, each of the engaging surfaces of the housings 810A is a curve structure with variable radius of curvature, that is an opening defined between the engaging surfaces of the housings 810A is non-circular, such that after the engaging surfaces of the housings 810A are pre-sleeved at the pipeline element 8200, a gap 8102A is defined between the engaging surfaces of the housings 810A and the groove bottom 8202 of the pipeline element 8200.

Further, the fastening elements 830A tightly fasten the housings 810A at the outer side of the pipeline elements 8200 by narrowing the gap 8102A to deform the housings 810A by decreasing the opening defined between the engaging surfaces of the housings 810A until the housings 810A partially or fully attaching on the outer side of the pipeline elements 8200. That is the housings 810A are substantially coupled with each other in such a manner that the engaging surfaces of the housings 810A are deformed to a circular structure sleeved at the groove bottom 8202 of the pipeline element 8200, and the opening between the engaging surfaces of the housings 810A is basically in circular shape, i.e. the size of the opening between the engaging surfaces of the housings 810A is fittingly matched with the tubular size of the pipeline element 8200, so that the gap 8102A is minimized to ensure sealing effect.

In particular, the two housings 810A includes a first housing 811A and a second housing 812A, wherein the first housing 811A includes a first body portion 8111A and two first fastening end portions 8112A, wherein the two first fastening portions 8112A are formed integrally at two ends of the first body portion 8111A, wherein the first body portion 8111A has two symmetrical and parallel first engaging surfaces 81111A. Correspondingly, the second housing 812A includes a second body portion 8121A and two second fastening end portions 8122A, wherein the two second fastening end portions 8122A are integrally formed at two ends of the second body portion 8121A respectively, wherein the second body portion 8121A has two symmetrical and parallel second engaging surfaces 81211A.

Selectively, the fastening element 830A is embodied as a set of bolt and nut, wherein the first fastening end portion 8112A has a first fastening hole 81121A, wherein the second fastening end portion 8122A has a second fastening hole 81221A, wherein the bolt of the fastening element 830A is passed through the first fastening hole 81121A and the second fastening hole 81221A and fastened with the nut of the fastening element 830A to tighten the first housing 811A with the second housing 812A through narrowing the gap 8102A.

According to the first alternative mode of the preferred embodiment, each of the first engaging surface 81111A and the second engaging surface 81211A is embodied as curve with variable radius of curvature, wherein radius of curvature of the curve with variable radius of curvature is not a fixed value, wherein the radius of the curve with variable radius of curvature is gradually increase from a minimum value to a maximum value. Further, the minimum value of the radius of curvature of the curve with variable radius of curvature is almost equal to the radius of curvature of the pipeline element 8200. In other words, a radius of curvature P1 at a middle position (or top arch position) of the curve with variable radius of curvature is substantially equal to the tubular radius of the groove bottom 8202 of the groove 8201 of the pipeline element 8200 and is the minimum value, wherein a radius of curvature P2 at each of the two end positions of the curve with variable radius of curvature is the maximum value.

It is understood that the curve with variable radius of curvature of the curve surface with variable radius of curvature includes, but not limited to, one or a combination of a logarithmic spiral curve, an Archimedes spiral curve, a pascal spiral curve, an ellipse curve, and a high power curve.

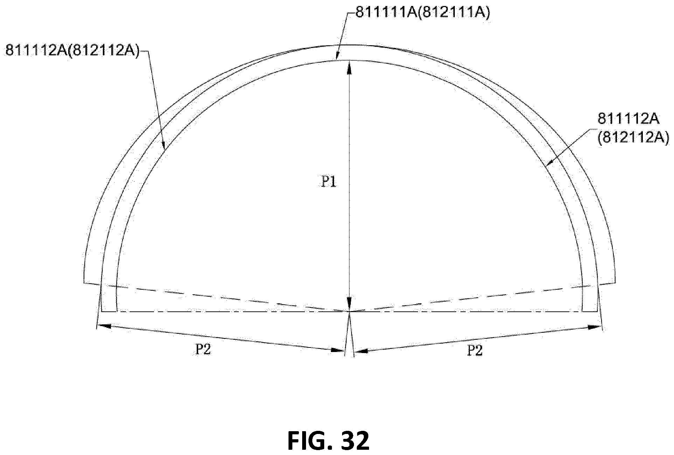

Referring to Fig. 32, in particular, the first engaging surface 81111A has a first curve surface 811111A and two second curve surfaces 811112A, wherein two second curve surfaces 811112A are extended from two sides of the first curve surface 81111A. Correspondingly, the second engaging surface 81211A has a third curve surface 812111A and two fourth curve surfaces 812112A, wherein two fourth curve surfaces 812112A are extended from two sides of the second curve surface 812111A.

According to the first alternative mode of the preferred embodiment, the first engaging surface 81111A and the second engaging surface 81211A are symmetrical, wherein the curve with variable radius of curvature of each of the first curve surface 811111A and the third curve surface 812111A is embodied as ellipse curve, wherein the curve with variable radius of curvature of each of the second curve surface 811112A and the fourth curve surface 812112A is embodied as Archimedes spiral curve. Further, the radius of curvatures at the junction of the first curve surface 811111A and the second curve surface 811112A are the same while the radius of curvatures at the junction of the third curve surface 812111A and the fourth curve surface 812112A are the same.

Optionally, the curve with variable radius of curvature of each of the first engaging surface 81111A, the second engaging surface 81211A, the third curve surface 812111A, and the fourth curve surface 812112A can be embodied to have the same or different curve with variable radius of curvature, which should be limited in the invention.

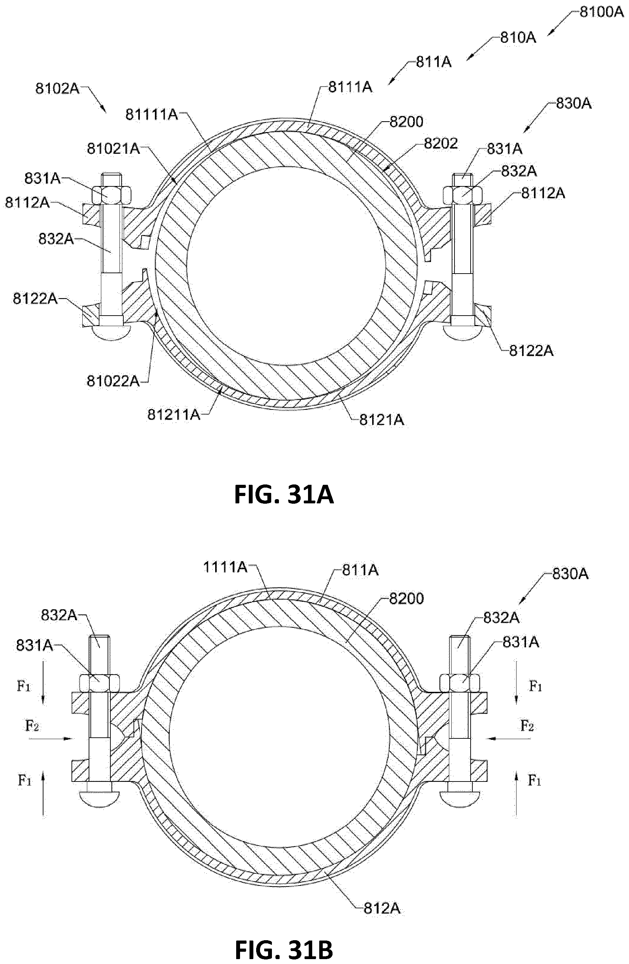

Referring to Figs. 31A and 31B, it is understood that, during installation, when the user tightens the fastening elements 830A to the predetermined torque value, two end portions of the first housing 811A and the second 812A deform through narrowing the gap 8102A until the two end portions of the first housing 811A and the second housing 812A are substantially in contact with each other, while the gap 8102A is as narrow as possible. In this situation, the first engaging surface 81111A and the second engaging surface 81211A combine to form a circular shape basically and partially or fully attach on the outer side of the corresponding pipeline element 8200.

In the first alternative mode of the preferred embodiment, in the process from the initial condition to the installed condition of the pipeline element coupling piece 8100A, each of the first engaging surface 81111A of the first housing 811A and the second engaging surface 81211A of the second housing 812A has a radius of curvature varying within 3% to 23%, wherein a value D2 of the opening between the two first fastening end portions 8112A of the first housing 811A varies within 2.5% to 15%. Correspondingly, the value D2 of the opening between the two second fastening end portions 8122A of the second housing 812A also varies within 2.5% to 15%. The above ranges are exemplary but not intended to limit the scope of the invention.

Further, the pipeline element coupling piece 8100A further comprises a sealing gasket 840A, wherein the gasket 840A is embodied as a ring structure. During installation, the gasket 840A is able to be pressed to sleeve in the housing 810A.

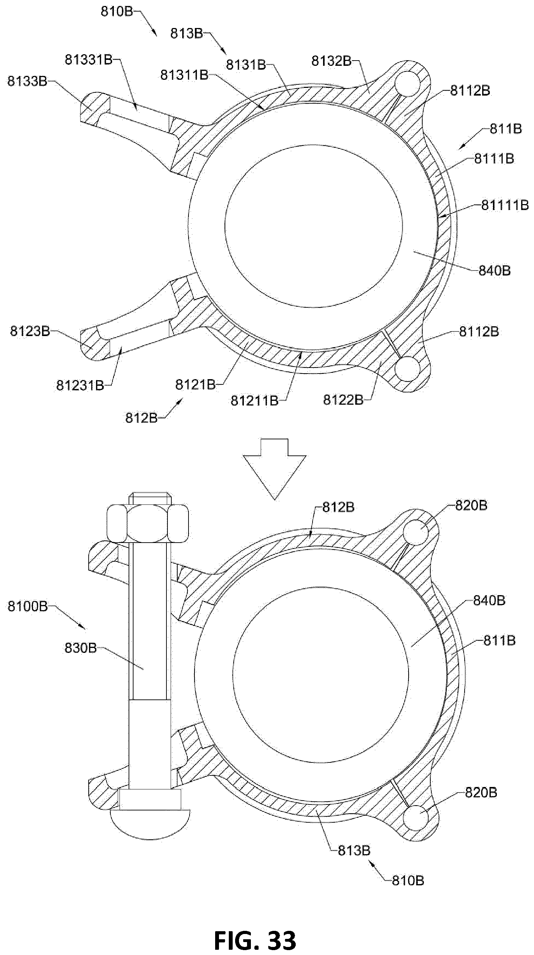

Referring to Fig. 33 to Fig. 35, a pipeline element coupling piece 8100B of a pipeline connecting device according to a second alternative mode of the above preferred embodiment is illustrated, which is different from the above preferred embodiment in that the pipeline element coupling piece 8100B comprises three housings 810B, two connecting elements 820B and one fastening element 839B, wherein the three housings 810B are configured correspondingly to couple two pipeline elements 8200 together, wherein each two of the three housings 810B are coupled with each other by the fastening element 830B or the connecting element 820B while a size of an opening defined between engaging surfaces of the housings 810B is adjustable, so as to achieve a sealing connection of the two pipeline elements 8200.

Further, each of the engaging surfaces of the housings 810B is a curve structure with variable radius of curvature, that is an opening defined between the engaging surfaces of the housings 810B is non-circular, such that after the engaging surfaces of the housings 810B are pre-sleeved at the pipeline element 8200, a gap 8102B is defined between the engaging surfaces of the housings 810B and the groove bottom 8202 of the pipeline element 8200.

Further, the fastening elements 830B tightly fasten the engaging surfaces of the housings 810B at the groove bottom 8202 of the pipeline element 8200 by narrowing the gap 8102B to deform the housings 810B by decreasing the opening defined between the engaging surfaces of the housings 810B until the engaging surfaces of the housings 810B partially or fully attaching on the groove bottom 8202 of the pipeline elements 8200. That is the housings 810B are substantially coupled with each other in such a manner that the engaging surfaces of the housings 810B are deformed to a circular structure sleeved at the outer side of the pipeline element 8200, and the opening between the engaging surfaces of the housings 810B is basically in circular shape, i.e. the size of the opening between the engaging surfaces of the housings 810B is fittingly matched with a diameter size of the groove bottom 8202 of the pipeline element 8200, so that the gap 8102B is minimized to ensure sealing effect.

Referring to Fig. 33, in particular, the two housings 810B includes a first housing 811B, a second housing 812B and a third housing 813B, wherein the first housing 811A includes a first body portion 8111B and two first pivot connecting end portions 8112B, wherein the two first pivot connecting end portions 8112B are formed integrally at two ends of the first body portion 8111B respectively, wherein the first body portion 8111B has two symmetrical and parallel first engaging surfaces 81111B.

Further, the second housing 812B includes a second body portion 8121B, a second pivot connecting end portion 8122B and a second fastening end portion 8123B, wherein the second fastening end portion 8123B and the second pivot connecting end portion 8122B are integrally formed at two ends of the second body portion 8121B respectively, wherein the second body portion 8121B has two symmetrical and parallel second engaging surfaces 81211B.

Further, the third housing 813B includes a third body portion 8131B, a third pivot connecting end portion 8132B and a third fastening end portion 8133B, wherein the third fastening end portion 8133B and the third pivot connecting end portion 8132B are integrally formed at two ends of the second body portion 8131B respectively, wherein the third body portion 8131B has two symmetrical and parallel second engaging surfaces 81311B.

Further, the two second first pivot connecting end portions 8112B are connected with the second pivot connecting end portion 8122B and the third pivot connecting end portion 8132B by the connecting elements 820B respectively, wherein the first fastening end portion 8133B and the second fastening end portion 8123B are fastened through the fastening element 830B.

Selectively, the fastening element 830B is embodied as a set of bolt and nut, wherein the second fastening end portion 8123B has a second fastening hole 81231B, wherein the third fastening end portion 8122A has a third fastening hole 81331A, wherein the bolt of the fastening element 830B is passed through the second fastening hole 81231B and the third fastening hole 81331B and fastened with the nut of the fastening element 830B to tighten the first housing 811B with the second housing 812B through narrowing the gap 8102B.

According to the second alternative mode of the preferred embodiment, each of the first engaging surface 81111B, the second engaging surface 81211B and the third engaging surface 8131 1B is embodied as curve with variable radius of curvature, wherein radius of curvature of the curve with variable radius of curvature is not a fixed value, wherein the radius of the curve with variable radius of curvature is gradually increase from a minimum value to a maximum value. Furthermore, the minimum value of the radius of curvature of the curve with variable radius of curvature is almost equal to the radius of curvature of the pipeline element 8200.

It is understood that the curve with variable radius of curvature of the curve surface with variable radius of curvature includes, but not limited to, one or a combination of a logarithmic spiral curve, an Archimedes spiral curve, a pascal spiral curve, an ellipse curve, and a high power curve.

According to the second alternative mode of the preferred embodiment, the curve with variable radius of curvature of the first engaging surface 81111B is embodied as ellipse curve, wherein each curve with variable radius of curvature of the second engaging surface 81211B and the third engaging surface 81311B is embodied as logarithmic spiral curve. The radius of curvature at a middle position (or top arch position) of the first engaging surface 81111B is a minimum value and substantially equal to a radius of curvature of the pipeline element 8200, wherein the radius of curvatures at the junction of the second curve surface 81211B and the third curve surface 81211B are the same, wherein the minimum value of the radius of curvature of the second engaging surface 81211B or the third engaging surface 81311B is larger than or equal to the maximum value of the radius of curvature of the first engaging surface 81111B.

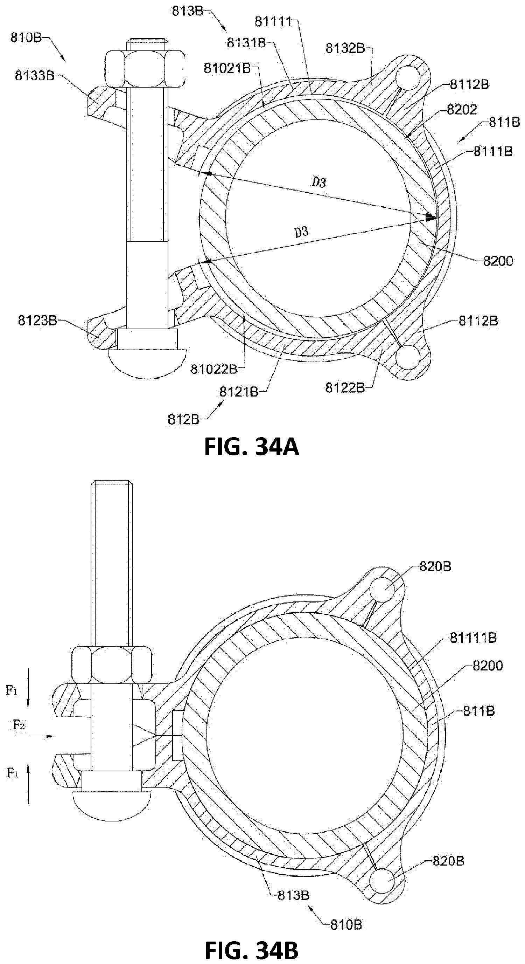

Referring to Figs. 34A and 34B, it is understood that, during installation, when the user tightens the fastening elements 830B to the predetermined torque value, the first housing 811B, the second housing 812B and the third housing 813B deform through narrowing the gap 8102B rendering the engaging surfaces partially or fully attached at the groove bottom 8202 of the pipeline element 8200. The first fastening end portion 8123B of the second housing 812B and the third fastening end portion 8133B of the third housing 813B are substantially in contact with each other, wherein the first engaging surface 81111B, the second engaging surface 81211B and the third engaging surface 81311B are deformed and combined to form a circular surface and basically be partially or fully attaching on the groove bottom 8202 of the corresponding pipeline element 8200.

In the second alternative mode of the preferred embodiment, in the process from the initial condition to the installed condition of the pipeline element coupling piece 8100B, each of the first engaging surface 81111B of the first housing 811B, the second engaging surface 81211B of the second housing 812B and the third engaging surface 81311B of the third housing 813B has a radius of curvature varying within 13% to 221%, wherein a value D3 of the opening defined between the second fastening end portion 8123B of the second housing 812B and the middle position (or the top arch position) of the first engaging surface 81111B of the first housing 811B varies within 14% to 22%. Correspondingly, the value D3 of the opening between the third fastening end portion 8133B of the third housing 813B and the middle position (or the top arch position) of the first engaging surface 81111B also varies within 14% to 22%. The above ranges are exemplary but not intended to limit the scope of the invention.

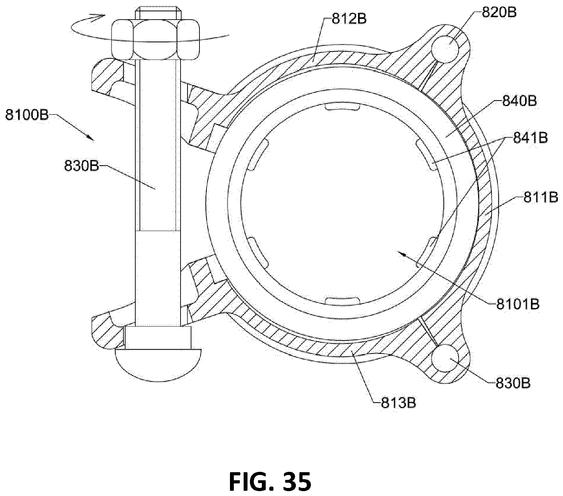

Further, the pipeline element coupling piece 8100B further comprises a sealing gasket 840B, wherein the gasket 840B is embodied as a ring structure. During installation, the gasket 840B is able to be pressed to sleeve in the housing 810B. Referring to Fig. 35, optionally, an inner side of the gasket 840B has a plurality of protrusions 841B, wherein a predetermined distance is defined between every two of the plurality of protrusions 841B so as to provide a predetermined deforming space for the gasket 840B for enhancing the sealing effect.

One skilled in the art will understand that the embodiment of the present invention as shown in the drawings and described above is exemplary only and not intended to be limiting. It will thus be seen that the objects of the present invention have been fully and effectively accomplished. The embodiments have been shown and described for the purposes of illustrating the functional and structural principles of the present invention and are subject to change without departure from such principles. Therefore, this invention includes all modifications encompassed within the scope of the following claims.

## Claims

1. A pipeline element assembly, comprising at least two pipeline elements (200) and a pipeline element coupling piece (100) for coupling the at least two pipeline elements (200) each of the at least two pipeline elements (200) having a groove (201) and a groove circumference (203) at a groove bottom of the groove (201), wherein the pipeline element coupling piece (100) comprises:
two or more coupling units (10), wherein each of the two or more coupling units (10) includes two engaging keys (12) respectively, wherein each of the engaging keys (12) has an engaging surface (121) having a variable radius of curvature;
at least one gasket (40) disposed in a cavity (101) defined between the two or more coupling units (10); and
at least one fastening element (30) configured for fastening the two or more coupling units (10) together for pre-sleeving at the at least two pipeline elements (200) while aligning the engaging keys (12) with the grooves (201) of the at least two pipeline elements (200), such that when the at least one fastening element (30) is operated to fasten the two or more coupling units (10) together, the engaging keys (12) are engageable in the grooves (201) of the at least two pipeline elements (200) and each of the engaging surfaces (121) is deformable to vary the variable radius of curvature so as to substantially match with a radius of curvature of each of the groove circumference (203) of the groove bottom of each of the at least two pipeline elements (200); and
at least one pivot connecting element (20), wherein the two or more coupling units (10) include a first coupling unit (10A) and a second coupling unit (10B) and the at least one pivot connecting element (20) is configured to pivotally connect the first and second coupling units (10A; 10B);
wherein, each of the two coupling units (10) comprises a housing (810), a pivot connecting end portion (112) integrally extended from the housing (810) and a fastening end portion (113) integrally extended from the housing (810), wherein the pivot connecting end portions (112) of the first and second coupling units (10A; 10B) are pivotally connected with each other by the at least one pivot connecting element (20), and the fastening end portions (113) of the first and second coupling units (10A; 10B) are configured to be fastened by the at least one fastening element (30); and
wherein, each of the engaging surfaces (121) of the two coupling units (10) has a proximate end point (1211) adjacent to the pivot connecting end portion (112) thereof and a distal end point (1212) adjacent to the fastening end portion (113) thereof,
**characterized in that** the radius of curvature of each of the engaging surfaces (121) gradually increases from the proximate end point (1211) to the distal end point (1212).

2. The pipeline element assembly, as recited in claim 1, **characterized in that**, each of the engaging surfaces (121) of the two or more coupling units (10) defines a curve with variable radius of curvature selected from a group consisting of one or a combination of a logarithmic spiral curve, an Archimedes spiral curve, a pascal spiral curve, an ellipse curve, and a high power curve.

3. The pipeline element assembly, as recited in claim 1, **characterized in that**, each of the engaging surfaces (121) of the first and second coupling units (10A; 10B) defines a curve with variable radius of curvature which is a logarithmic spiral curve.

4. The pipeline element assembly, as recited in claim 3, **characterized in that**, the radius of curvature at the proximate end point (1211) of each of the engaging surfaces (121) is configured for equaling to a radius of curvature of the groove circumference (203) of the groove (201) of the pipeline element (200).

5. The pipeline element assembly, as recited in claim 4, **characterized in that**, each of the pipeline elements (200) comprises an enlarged coupling end portion (202), wherein the radius of curvature of the distal end point (1212) of each of the engaging surfaces (121) is not smaller than a radius of curvature of the enlarged coupling end portion (202).

6. The pipeline element assembly, as recited in claim 1, **characterized in that**, each of the engaging surfaces (121) defines a logarithmic spiral curve having an equation of ρ=e^{θ}, wherein θ has a range of 0-180°, wherein ρ₁ denotes the radius of curvature at the proximate end point, ρ₂ denotes the radius of curvature at the distal end point, D1 denotes a diameter of the groove circumference of the groove, and D2 denotes a diameter of the enlarged coupling end portion, wherein ρ₁=D1/2, ρ₂=D2/2+R, wherein R has a value range of 0.3-1mm.

7. The pipeline element assembly, as recited in claim 1, **characterized in that**, a deformation of each of the engaging surfaces (121) results in deformed and varied radiuses of curvature thereof, wherein a variation range thereof is 4.5% to 12%.

8. The pipeline element assembly, as recited in claim 1, **characterized in that**, D denotes a distance between the proximate end point (1211) and the distal end point (1212), wherein a deformation of each of the engaging surfaces (121) results in variation of D, wherein a variation range thereof is 4% to 15%.

9. The pipeline element assembly, as recited in claim 1, **characterized in that**, the fastening element (30) includes a bolt (31) and a nut (32) for coupling with the bolt (31), wherein each of the pivot connecting end portions (112) has a connecting hole (1121) and the pivot connecting element (20) is a pivotal pin configured to pass through the connecting holes (1121) to connect the pivot connecting end portions (112), wherein each of the fastening end portions (113) has a fastening hole (1131) and the fastening element (30) is configured to pass through the fastening holes (1131) of the fastening end portions (113).

10. The pipeline element assembly, as recited in claim 1, **characterized in that**, further comprising a first pivot connecting element and a second pivot connecting element, wherein the two or more coupling units (10) include a first coupling unit (10A), a second coupling unit (10B) and a third coupling unit (10C), wherein the first pivot connecting element is configured to pivotally connect the first coupling unit (10A) and the second coupling unit (10B) and the second pivot connecting member is configured to pivotally connect the second coupling unit (10B) and the third coupling unit (10C), wherein the fastening element (30) is configured to fasten the first coupling unit (10A) and the third coupling unit (10C).

11. The pipeline element assembly, as recited in claim 10, **characterized in that**, each of the engaging surfaces (121) of the first coupling unit (10A) and the third coupling unit (10C) defines a logarithmic spiral curve and the engaging surface (121) of the second coupling unit (10B) defines an ellipse curve.

12. The pipeline element assembly, as recited in claim 10, **characterized in that**, the engaging surface (121) of the second coupling unit (10B) has a middle point having a minimum radius of curvature which is equal to the radius of curvature of the groove circumference (203) of the groove (201) of the pipeline element (200).

13. The pipeline element assembly, as recited in claim 11, **characterized in that**, each of the pipeline elements (200) comprises an enlarged coupling end portion (202), wherein each of the engaging surfaces (121) of the first coupling unit (10A) and the third coupling unit (10C) has a distal end point (1212), wherein a radius of curvature at the distal end point (1212) is not smaller than a radius of curvature of the enlarged coupling end portion (202).

14. The pipeline element assembly, as recited in claim 12, **characterized in that**, further comprising transition points (1214B; 1215A; and 1215C) between the second coupling unit (10B) and the first coupling unit (10A) and between the second coupling unit (10B) and the third coupling unit (10C) respectively, wherein the transition points (1214B; 1215A; and 1215C) have the same radius or curvature.

15. The pipeline element assembly, as recited in claim 13, **characterized in that**, a deformation of each of the engaging surfaces (121) results in deformed and varied radiuses of curvature thereof, wherein a variation range thereof is 13% to 21%.

16. The pipeline element assembly, as recited in claim 13, **characterized in that**, D' denotes a distance between the proximate end point (1211) and the distal end point (1212), wherein a deformation of each of the engaging surfaces (121) results in variation of D', wherein a variation range thereof is 14% to 22%.

17. The pipeline element assembly, as recited in claim 13, **characterized in that**, each of the engaging surfaces (121) of the first coupling unit (10A) and the third coupling unit (10C) defines a logarithmic spiral curve having an equation of ρ=e^{θ}, wherein θ has a range of 60° to 200°, wherein ρₐ denotes the radius of curvature of the engaging surface (121) of the second coupling unit (10B), ρ_{b} denotes the radius of curvature of the engaging surface (121) of the second coupling unit (10B), ρ_{A} denotes the radius of curvature of each of the engaging surfaces (121) of the first and third coupling units (10A, 10C), ρ_{B} denotes the radius of curvature of each of the engaging surfaces (121) of the first and third coupling units (10A, 10C), D1 denotes a diameter of the groove circumference (203) of the groove (201), and D2 denotes a diameter of the enlarged coupling end portion (202), wherein ρₐ=D1/2, ρ_{A}=(Sp+R')/2, ρ_{b}=D2/2+R, and ρ_{B}=D2/2, wherein R' has a value range of 0.3-1mm.

18. The pipeline element assembly, as recited in claim 17, **characterized in that**, Da denotes a value of a minor axis of the ellipse curve of the second coupling unit (10B), Db denotes a value of a major axis of the ellipse curve of the second coupling unit (10B), Sp denotes a standard of the pipeline element (200), D1 denotes a diameter of the groove circumference (203) of the pipeline element (200), and D2 denotes a diameter of the enlarged coupling end portion (202), wherein Da=D1, Db=Sp+R', wherein R' has value range of 0.3-1mm.

19. The pipeline element assembly, as recited in claim 10, **characterized in that**, the fastening element (30) includes a bolt (31) and a nut (32) for coupling with the bolt (31), wherein each of the first pivot connecting element and the second pivot connecting element is a connecting pin.

20. The pipeline element assembly, as recited in claim 1, **characterized in that**, each of the pipeline elements (200) has an enlarged coupling end portion (202), wherein the at least one gasket (40) includes a plurality of protrusions (432) spaced apart with each other, which is configured to be pressed between the two enlarged coupling end portions (202) of the two pipeline elements (200).

21. The pipeline element assembly, as recited in claim 1, **characterized in that**, the at least one gasket (40) comprises a base body (41), two biasing elements (42) integrally extended from the base body (41), and a retaining element (43) integrally extended from a middle portion of the base body (41), wherein the retaining element (43) includes a retaining body (431) and a plurality of protrusions (432) integrally extended from the retaining body (431) and spaced apart from each other, wherein each of the biasing elements (42) includes an extending portion (421) integrally extended from the base body (41) and a biasing portion (422) inwardly and inclinedly extended from the extending portion (421).

22. A coupling method for coupling the pipeline element assembly according to any one of claims 1-21, wherein the two pipelines elements (200) are coupled by the pipeline element coupling piece (100), wherein the coupling method comprises steps of
(a) receiving an enlarged coupling end portions (202) of the two pipeline elements (200) in two connecting end portions of the pipeline element coupling piece (100) and aligning engaging keys (12) of two or more coupling units (10) of the pipeline element coupling piece (100), wherein each engaging surfaces (121) of the engaging keys (12) has a radius of curvature; and
(b) deforming the engaging surfaces (121) of the engaging keys (12) to increase contacting area around the corresponding grooves (201) of the pipeline elements (200) and the engaging surfaces (121), so as to retain the engaging keys (12) in the corresponding grooves (201) of the pipeline elements (200).

23. The coupling method, as recited in claim 22, **characterized in that**, the engaging surfaces (121) define curves with different radiuses of curvature, wherein each of the curves is selected from a group consisting of one or a combination of a logarithmic spiral curve, an Archimedes spiral curve, a pascal spiral curve, an ellipse curve, and a high power curve.

## Patentansprüche

1. Rohrleitungselementanordnung umfassend mindestens zwei Rohrleitungselemente (200) und ein Rohrleitungselement-Kupplungsstück (100) zum Kuppeln der mindestens zwei Rohrleitungselemente (200), wobei jedes der mindestens zwei Rohrleitungselemente (200) eine Nut (201) und einen Nutumfang (203) an einem Nutboden der Nut (201) aufweist, wobei das Rohleitungselement-Kupplungsstück (100) umfasst:
zwei oder mehr Kupplungseinheiten (10), wobei jede der zwei oder mehr Kupplungseinheiten (10) jeweils zwei Eingriffskeile (12) umfasst, wobei jeder der Eingriffskeile (12) eine Eingriffsfläche (121) mit einem variablen Krümmungsradius aufweist;
mindestens eine Dichtung (40), die in einem Hohlraum (101) angeordnet ist, der zwischen den zwei oder mehr Kupplungseinheiten (10) definiert ist; und
mindestens ein Befestigungselement (30), das zum Befestigen der zwei oder mehr Kupplungseinheiten (10) aneinander konfiguriert ist, um an den mindestens zwei Rohrleitungselementen (200) vorzuspannen, während die Eingriffskeile (12) mit den Nuten (201) der mindestens zwei Rohrleitungselemente (200) ausgerichtet sind, derart, dass, wenn das mindestens eine Befestigungselement (30) betätigt wird, um die zwei oder mehr Kupplungseinheiten (10) aneinander zu befestigen, die Eingriffskeile (12) in die Nuten (201) der mindestens zwei Rohrleitungselemente (200) eingreifen können und jede der Eingriffsflächen (121) verformbar ist, um den variablen Krümmungsradius so zu verändern, dass er im Wesentlichen mit einem Krümmungsradius jedes der Nutumfänge (203) des Nutbodens jedes der mindestens zwei Rohrleitungselemente (200) übereinstimmt; und
mindestens ein Schwenkverbindungselement (20), wobei die zwei oder mehr Kupplungseinheiten (10) eine erste Kupplungseinheit (10A) und eine zweite Kupplungseinheit (10B) umfassen und das mindestens eine Schwenkverbindungselement (20) dafür konfiguriert ist, die erste und die zweite Kupplungseinheit (10A; 10B) schwenkbar zu verbinden;
wobei jede der zwei Kupplungseinheiten (10) ein Gehäuse (810), einen Schwenkverbindungsendabschnitt (112), der sich einstückig von dem Gehäuse (810) aus erstreckt, und einen Befestigungsendabschnitt (113), der sich einstückig von dem Gehäuse (810) aus erstreckt, umfasst, wobei die Schwenkverbindungsendabschnitte (112) der ersten und der zweiten Kupplungseinheit (10A; 10B) durch das mindestens eine Schwenkverbindungselement (20) schwenkbar miteinander verbunden sind, und die Befestigungsendabschnitte (113) der ersten und der zweiten Kupplungseinheit (10A; 10B) dafür konfiguriert sind, durch das mindestens eine Befestigungselement (30) befestigt zu werden; und
wobei jede der Eingriffsflächen (121) der zwei Kupplungseinheiten (10) einen proximalen Endpunkt (1211) angrenzend an ihren Schwenkverbindungsendabschnitt (112) und einen distalen Endpunkt (1212) angrenzend an ihren Befestigungsendabschnitt (113) aufweist,
**dadurch gekennzeichnet, dass**
der Krümmungsradius jeder der Eingriffsflächen (121) von dem proximalen Endpunkt (1211) zu dem distalen Endpunkt (1212) allmählich zunimmt.

2. Rohrleitungselementanordnung nach Anspruch 1, **dadurch gekennzeichnet, dass** jede der Eingriffsflächen (121) der zwei oder mehr Kupplungseinheiten (10) eine Kurve mit variablem Krümmungsradius definiert, ausgewählt aus einer Gruppe bestehend aus einer oder einer Kombination aus einer logarithmischen Spiralekurve, einer archimedischen Spiralekurve, einer Pascalschen Schnecke, einer elliptischen Kurve und einer Hochpotenzkurve.

3. Rohrleitungselementanordnung nach Anspruch 1, **dadurch gekennzeichnet, dass** jede der Eingriffsflächen (121) der ersten und der zweiten Kupplungseinheit (10A; 10B) eine Kurve mit variablem Krümmungsradius definiert, die eine logarithmische Spiralekurve ist.

4. Rohrleitungselementanordnung nach Anspruch 3, **dadurch gekennzeichnet, dass** der Krümmungsradius am proximalen Endpunkt (1211) jeder der Eingriffsflächen (121) so konfiguriert ist, dass er einem Krümmungsradius des Nutumfangs (203) der Nut (201) des Rohrleitungselements (200) entspricht.

5. Rohrleitungselementanordnung nach Anspruch 4, **dadurch gekennzeichnet, dass** jedes der Rohrleitungselemente (200) einen vergrößerten Kupplungsendabschnitt (202) umfasst, wobei der Krümmungsradius des distalen Endpunkts (1212) jeder der Eingriffsflächen (121) nicht kleiner als ein Krümmungsradius des vergrößerten Kupplungsendabschnitts (202) ist.

6. Rohrleitungselementanordnung nach Anspruch 1, **dadurch gekennzeichnet, dass** jede der Eingriffsflächen (121) eine logarithmische Spiralekurve definiert mit einer Gleichung von ρ=e^{θ}, wobei θ einen Bereich von 0-180° hat, wobei ρ₁ den Krümmungsradius an dem proximalen Endpunkt bezeichnet, ρ₂ den Krümmungsradius an dem distalen Endpunkt bezeichnet, D1 einen Durchmesser des Nutumfangs der Nut bezeichnet und D2 einen Durchmesser des vergrößerten Kupplungsendabschnitts bezeichnet, wobei ρ₁=D1/2, ρ₂=D2/2+R, wobei R einen Wertebereich von 0,3-1 mm hat.

7. Rohrleitungselementanordnung nach Anspruch 1, **dadurch gekennzeichnet, dass** eine Verformung jeder der Eingriffsflächen (121) zu verformten und variierten Krümmungsradien derselben führt, wobei ein Variationsbereich derselben 4,5% bis 12% beträgt.

8. Rohrleitungselementanordnung nach Anspruch 1, **dadurch gekennzeichnet, dass** D einen Abstand zwischen dem proximalen Endpunkt (1211) und dem distalen Endpunkt (1212) bezeichnet, wobei eine Verformung jeder der Eingriffsflächen (121) zu einer Variation von D führt, wobei ein Variationsbereich derselben 4% bis 15% beträgt.

9. Rohrleitungselementanordnung nach Anspruch 1, **dadurch gekennzeichnet, dass** das Befestigungselement (30) einen Bolzen (31) und eine Mutter (32) zum Kuppeln mit dem Bolzen (31) umfasst, wobei jeder der Schwenkverbindungsendabschnitte (112) ein Verbindungsloch (1121) aufweist und das Schwenkverbindungselement (20) ein Schwenkstift ist, der so konfiguriert ist, dass er durch die Verbindungslöcher (1121) hindurchgeht, um die Schwenkverbindungsendabschnitte (112) zu verbinden, wobei jeder der Befestigungsendabschnitte (113) ein Befestigungsloch (1131) aufweist und das Befestigungselement (30) so konfiguriert ist, dass es durch die Befestigungslöcher (1131) der Befestigungsendabschnitte (113) hindurchgeht.

10. Rohrleitungselementanordnung nach Anspruch 1, **dadurch gekennzeichnet, dass** sie ferner ein erstes Schwenkverbindungselement und ein zweites Schwenkverbindungselement umfasst, wobei die zwei oder mehr Kupplungseinheiten (10) eine erste Kupplungseinheit (10A), eine zweite Kupplungseinheit (10B) und eine dritte Kupplungseinheit (10C) umfassen, wobei das erste Schwenkverbindungselement so konfiguriert ist, dass es die erste Kupplungseinheit (10A) und die zweite Kupplungseinheit (10B) schwenkbar verbindet, und das zweite Schwenkverbindungselement so konfiguriert ist, dass es die zweite Kupplungseinheit (10B) und die dritte Kupplungseinheit (10c) schwenkbar verbindet, wobei das Befestigungselement (30) so konfiguriert ist, dass es die erste Kupplungseinheit (10A) und die dritte Kupplungseinheit (10C) befestigt.

11. Rohrleitungselementanordnung nach Anspruch 10, **dadurch gekennzeichnet, dass** jede der Eingriffsflächen (121) der ersten Kupplungseinheit (10A) und der dritten Kupplungseinheit (10C) eine logarithmische Spiralekurve definiert und die Eingriffsfläche (121) der zweiten Kupplungseinheit (10B) eine elliptische Kurve definiert.

12. Rohrleitungselementanordnung nach Anspruch 10, **dadurch gekennzeichnet, dass** die Eingriffsfläche (121) der zweiten Kupplungseinheit (10B) einen Mittelpunkt mit einem minimalen Krümmungsradius aufweist, der gleich dem Krümmungsradius des Nutumfangs (203) der Nut (201) des Rohrleitungselements (200) ist.

13. Rohrleitungselementanordnung nach Anspruch 11, **dadurch gekennzeichnet, dass** jedes der Rohrleitungselemente (200) einen vergrößerten Kupplungsendabschnitt (202) umfasst, wobei jede der Eingriffsflächen (121) der ersten Kupplungseinheit (10A) und der dritten Kupplungseinheit (10C) einen distalen Endpunkt (1212) aufweist, wobei ein Krümmungsradius an dem distalen Endpunkt (1212) nicht kleiner als ein Krümmungsradius des vergrößerten Kupplungsendabschnitts (202) ist.

14. Rohrleitungselementanordnung nach Anspruch 12, **dadurch gekennzeichnet, dass** sie ferner Übergangspunkte (1214B; 1215A; und 1215C) zwischen der zweiten Kupplungseinheit (10B) und der ersten Kupplungseinheit (10A) bzw. zwischen der zweiten Kupplungseinheit (10B) und der dritten Kupplungseinheit (10C) umfasst, wobei die Übergangspunkte (1214B; 1215A; und 1215C) den gleichen Radius oder die gleiche Krümmung aufweisen.

15. Rohrleitungselementanordnung nach Anspruch 13, **dadurch gekennzeichnet, dass** eine Verformung jeder der Eingriffsflächen (121) zu verformten und variierten Krümmungsradien derselben führt, wobei ein Variationsbereich derselben 13% bis 21% beträgt.

16. Rohrleitungselementanordnung nach Anspruch 13, **dadurch gekennzeichnet, dass** D' einen Abstand zwischen dem proximalen Endpunkt (1211) und dem distalen Endpunkt (1212) bezeichnet, wobei eine Verformung jeder der Eingriffsflächen (121) zu einer Variation von D' führt, wobei ein Variationsbereich derselben 14% bis 22% beträgt.

17. Rohrleitungselementanordnung nach Anspruch 13, **dadurch gekennzeichnet, dass** jede der Eingriffsflächen (121) der ersten Kupplungseinheit (10A) und der dritten Kupplungseinheit (10C) eine logarithmische Spiralekurve mit einer Gleichung von ρ=e^{θ} definiert, wobei θ einen Bereich von 60° bis 200° hat, wobei ρₐ den Krümmungsradius der Eingriffsfläche (121) der zweiten Kupplungseinheit (10B) bezeichnet, ρ_{b} den Krümmungsradius der Eingriffsfläche (121) der zweiten Kupplungseinheit (10B) bezeichnet, ρ_{A} den Krümmungsradius jeder der Eingriffsflächen (121) der ersten und der dritten Kupplungseinheit (10A, 10C) bezeichnet, ρ_{B} den Krümmungsradius jeder der Eingriffsflächen (121) der ersten und der dritten Kupplungseinheit (10A, 10C) bezeichnet, D1 einen Durchmesser des Nutumfangs (203) der Nut (201) bezeichnet, und D2 einen Durchmesser des vergrößerten Kupplungsendabschnitts (202) bezeichnet, wobei ρₐ=D1/2, ρ_{A}=(Sp+R')/2, ρ_{b}=D2/2+R und ρ_{B}=D2/2, wobei R' einen Wertebereich von 0,3-1 mm aufweist.

18. Rohrleitungselementanordnung nach Anspruch 17, **dadurch gekennzeichnet, dass** Da einen Wert einer Nebenachse der elliptischen Kurve der zweiten Kupplungseinheit (10B) bezeichnet, Db einen Wert einer Hauptachse der elliptischen Kurve der zweiten Kupplungseinheit (10B) bezeichnet, Sp einen Standard des Rohrleitungselements (200) bezeichnet, D1 einen Durchmesser des Nutumfangs (203) des Rohrleitungselements (200) bezeichnet, und D2 einen Durchmesser des vergrößerten Kopplungsendabschnitts (202) bezeichnet, wobei Da=D1, Db=Sp+R', wobei R' einen Wertebereich von 0,3-1 mm aufweist.

19. Rohrleitungselementanordnung nach Anspruch 10, **dadurch gekennzeichnet, dass** das Befestigungselement (30) einen Bolzen (31) und eine Mutter (32) zum Koppeln mit dem Bolzen (31) umfasst, wobei das erste Schwenkverbindungselement und das zweite Schwenkverbindungselement jeweils ein Verbindungsstift ist.

20. Rohrleitungselementanordnung nach Anspruch 1, **dadurch gekennzeichnet, dass** jedes der Rohrleitungselemente (200) einen vergrößerten Kupplungsendabschnitt (202) aufweist, wobei die mindestens eine Dichtung (40) eine Vielzahl von Vorsprüngen (432) umfasst, die voneinander beabstandet sind, welche dafür konfiguriert ist, zwischen die zwei vergrößerten Kupplungsendabschnitte (202) der zwei Rohrleitungselemente (200) gepresst zu werden.

21. Rohrleitungselementanordnung nach Anspruch 1, **dadurch gekennzeichnet, dass** die mindestens eine Dichtung (40) einen Grundkörper (41), zwei Vorspannelemente (42), die sich einstückig von dem Grundkörper (41) aus erstrecken, und ein Halteelement (43), das sich einstückig von einem Mittelabschnitt des Grundkörpers (41) aus erstreckt, umfasst, wobei das Halteelement (43) einen Haltekörper (431) und eine Vielzahl von Vorsprüngen (432) umfasst, die sich einstückig von dem Haltekörper (431) aus erstrecken und voneinander beabstandet sind, wobei jedes der Vorspannelemente (42) einen Verlängerungsabschnitt (421), der sich einstückig von dem Grundkörper (41) aus erstreckt, und einen Vorspannabschnitt (422), der sich nach innen und schräg von dem Verlängerungsabschnitt (421) aus erstreckt, umfasst.

22. Kupplungsverfahren zum Kuppeln der Rohrleitungselementanordnung nach einem der Ansprüche 1 bis 21, wobei die beiden Rohrleitungselemente (200) durch das Rohrleitungselement-Kupplungsstück (100) gekuppelt sind, wobei das Kupplungsverfahren die folgenden Schritte umfasst:
(a) Aufnehmen eines vergrößerten Kupplungsendabschnitts (202) der zwei Rohrleitungselemente (200) in zwei Verbindungsendabschnitten des Rohrleitungselement-Kupplungsstücks (100) und Ausrichten der Eingriffskeile (12) von zwei oder mehr Kupplungseinheiten (10) des Rohrleitungselement-Kupplungsstücks (100), wobei jede Eingriffsfläche (121) der Eingriffskeile (12) einen Krümmungsradius aufweist; und
(b) Verformen der Eingriffsflächen (121) der Eingriffskeile (12), um den Kontaktbereich um die entsprechenden Nuten (201) der Rohrleitungselemente (200) und die Eingriffsflächen (121) zu vergrößern, um die Eingriffskeile (12) in den entsprechenden Nuten (201) der Rohrleitungselemente (200) zu halten.

23. Kupplungsverfahren nach Anspruch 22, **dadurch gekennzeichnet, dass** die Eingriffsflächen (121) Kurven mit unterschiedlichen Krümmungsradien definieren, wobei jede der Kurven ausgewählt ist aus einer Gruppe bestehend aus einer oder einer Kombination aus einer logarithmischen Spiralekurve, einer archimedischen Spiralekurve, einer Pascalschen Schnecke, einer elliptischen Kurve und einer Hochpotenzkurve.

## Revendications

1. Ensemble d'éléments de tuyau comprenant au moins deux éléments de tuyau (200) et une pièce de couplage d'éléments de tuyau (100) pour coupler les au moins deux éléments de tuyau (200), chacun des au moins deux éléments de tuyau (200) ayant une gorge (201) et une circonférence de gorge (203) au niveau d'un fond de gorge de la gorge (201), dans lequel la pièce de couplage d'éléments de tuyau (100) comprend :
deux unités de couplage (10) ou plus, dans lequel chacune des deux unités de couplage (10) ou plus comprend respectivement deux clavettes de mise en prise (12), dans lequel chacune des clavettes de mise en prise (12) a une surface de mise en prise (121) ayant un rayon de courbure variable ;
au moins un joint (40) disposé dans une cavité (101) définie entre les deux unités de couplage (10) ou plus ; et
au moins un élément de fixation (30) configuré pour fixer les deux unités de couplage (10) ou plus ensemble pour préemmancher les au moins deux éléments de tuyau (200) tout en alignant les clavettes de mise en prise (12) avec les gorges (201) des au moins deux éléments de tuyau (200), de sorte que lorsque le au moins un élément de fixation (30) est actionné pour fixer les deux unités de couplage (10) ou plus ensemble, les clavettes de mise en prise (12) peuvent être mises en prise dans les gorges (201) des au moins deux éléments de tuyau (200) et chacune des surfaces de mise en prise (121) est déformable pour modifier le rayon de courbure variable afin de correspondre sensiblement à un rayon de courbure de chacune des circonférences de gorge (203) du fond de gorge de chacun des au moins deux éléments de tuyau (200) ; et
au moins un élément de raccordement à pivot (20), dans lequel les deux unités de couplage (10) ou plus comprennent une première unité de couplage (10A) et une deuxième unité de couplage (10B) et le au moins un élément de raccordement à pivot (20) est configuré pour raccorder, par pivot, les première et deuxième unités de couplage (10A, 10B) ;
dans lequel chacune des deux unités de couplage (10) comprend un boîtier (810), une partie d'extrémité de raccordement à pivot (112) étendue de manière solidaire à partir du boîtier (810) et une partie d'extrémité de fixation (113) étendue de manière solidaire à partir du boîtier (810), dans lequel les parties d'extrémité de raccordement à pivot (112) des première et seconde unités de couplage (10A ; 10B) sont raccordées de manière pivotante entre elles par le au moins un élément de raccordement à pivot (20), et les parties d'extrémité de fixation (113) des première et seconde unités de couplage (10A ; 10B) sont configurées pour être fixées par le au moins un élément de fixation (30) ; et
dans lequel chacune des surfaces de mise en prise (121) des deux unités de couplage (10) a un point d'extrémité proximal (1211) adjacent à sa partie d'extrémité de raccordement à pivot (112) et un point d'extrémité distal (1212) adjacent à sa partie d'extrémité de fixation (113),
**caractérisé en ce que** :
le rayon de courbure de chacune des surfaces de mise en prise (121) augmente progressivement du point d'extrémité proximal (1211) au point d'extrémité distal (1212).

2. Ensemble d'éléments de tuyau selon la revendication 1, **caractérisé en ce que** chacune des surfaces de mise en prise (121) des deux unités de couplage (10) ou plus définit une courbe avec un rayon de courbure variable sélectionné dans un groupe comprenant une ou une combinaison d'une courbe de spirale logarithmique, une courbe de spirale d'Archimède, une courbe de spirale de Pascal, une courbe elliptique et une courbe de puissance élevée.

3. Ensemble d'éléments de tuyau selon la revendication 1, **caractérisé en ce que** chacune des surfaces de mise en prise (121) des première et deuxième unités de couplage (10A ; 10B) définit une courbe avec un rayon de courbure variable qui est une courbe de spirale logarithmique.

4. Ensemble d'éléments de tuyau selon la revendication 3, **caractérisé en ce que** le rayon de courbure au niveau du point d'extrémité proximal (1211) de chacune des surfaces de mise en prise (121) est configuré pour être égal à un rayon de courbure de la circonférence de gorge (203) de la gorge (201) de l'élément de tuyau (200).

5. Ensemble d'éléments de tuyau selon la revendication 4, **caractérisé en ce que** chacun des éléments de tuyau (200) comprend une partie d'extrémité de couplage agrandie (202), dans lequel le rayon de courbure du point d'extrémité distal (1212) de chacune des surfaces de mise en prise (121) n'est pas inférieur à un rayon de courbure de la partie d'extrémité de couplage agrandie (202).

6. Ensemble d'éléments de tuyau selon la revendication 1, **caractérisé en ce que** chacune des surfaces de mise en prise (121) définit une courbe de spirale logarithmique ayant une équation de ρ = e^{θ}, où θ a une plage de 0 à 180°, où ρ₁ désigne le rayon de courbure au niveau du point d'extrémité proximal, ρ₂ désigne le rayon de courbure au niveau du point d'extrémité distal, D1 désigne un diamètre de la circonférence de gorge de la gorge, et D2 désigne un diamètre de la partie d'extrémité de couplage agrandie, dans lequel ρ₁ = D1/2, ρ₂ = D2/2+R, où R a une plage de valeurs de 0,3 à 1 mm.

7. Ensemble d'éléments de tuyau selon la revendication 1, **caractérisé en ce qu'**une déformation de chacune des surfaces de mise en prise (121) se traduit par ses rayons de courbure modifiés et déformés, dans lequel sa plage de variation est de 4,5% à 12%.

8. Ensemble d'éléments de tuyau selon la revendication 1, **caractérisé en ce que** D désigne une distance entre le point d'extrémité proximal (1211) et le point d'extrémité distal (1212), dans lequel une déformation de chacune des surfaces de mise en prise (121) se traduit par la variation de D, dans lequel sa plage de variation est de 4% à 15%.

9. Ensemble d'éléments de tuyau selon la revendication 1, **caractérisé en ce que** l'élément de fixation (30) comprend un boulon (31) et un écrou (32) pour se coupler avec le boulon (31), dans lequel chacune des parties d'extrémité de raccordement à pivot (112) a un trou de raccordement (1121) et l'élément de raccordement à pivot (20) est une broche pivotante configurée pour passer par les trous de raccordement (1121) afin de raccorder les parties d'extrémité de raccordement à pivot (112), dans lequel chacune des parties d'extrémité de fixation (113) a un trou de fixation (1131) et l'élément de fixation (30) est configuré pour passer par les trous de fixation (1131) des parties d'extrémité de fixation (113).

10. Ensemble d'éléments de tuyau selon la revendication 1, **caractérisé en ce qu'**il comprend en outre un premier élément de raccordement à pivot et un second élément de raccordement à pivot, dans lequel les deux unités de couplage (10) ou plus comprennent une première unité de couplage (10A), une deuxième unité de couplage (10B) et une troisième unité de couplage (10C), dans lequel le premier élément de raccordement à pivot est configuré pour raccorder, par pivot, la première unité de couplage (10A) et la deuxième unité de couplage (10B) et le second élément de raccordement à pivot est configuré pour raccorder, par pivot, la deuxième unité de couplage (10B) et la troisième unité de couplage (10C), dans lequel l'élément de fixation (30) est configuré pour fixer la première unité de couplage (10A) et la troisième unité de couplage (10C).

11. Ensemble d'éléments de tuyau selon la revendication 10, **caractérisé en ce que** chacune des surfaces de mise en prise (121) de la première unité de couplage (10A) et de la troisième unité de couplage (10C) définit une courbe de spirale logarithmique et la surface de mise en prise (121) de la deuxième unité de couplage (10B) définit une courbe elliptique.

12. Ensemble d'éléments de tuyau selon la revendication 10, **caractérisé en ce que** la surface de mise en prise (121) de la deuxième unité de couplage (10B) a un point central ayant un rayon de courbure minimum qui est égal au rayon de courbure de la circonférence de gorge (203) de la gorge (201) de l'élément de tuyau (200).

13. Ensemble d'éléments de tuyau selon la revendication 11, **caractérisé en ce que** chacun des éléments de tuyau (200) comprend une partie d'extrémité de couplage agrandie (202), dans lequel chacune des surfaces de mise en prise (121) de la première unité de couplage (10A) et de la troisième unité de couplage (10C) a un point d'extrémité distal (1212), dans lequel un rayon de courbure au niveau du point d'extrémité distal (1212) n'est pas inférieur à un rayon de courbure de la partie d'extrémité de couplage agrandie (202).

14. Ensemble d'éléments de tuyau selon la revendication 12, **caractérisé en ce qu'**il comprend en outre des points de transition (1214B ; 1215A et 1215C) entre la deuxième unité de couplage (10B) et la première unité de couplage (10A) et entre la deuxième unité de couplage (10B) et la troisième unité de couplage (10C) respectivement, dans lequel les points de transition (1214B ; 1215A et 1215C) ont le même rayon de courbure.

15. Ensemble d'éléments de tuyau selon la revendication 13, **caractérisé en ce qu'**une déformation de chacune des surfaces de mise en prise (121) se traduit par ses rayons de courbure déformés et modifiés, dans lequel sa plage de variation est de 13% à 21%.

16. Ensemble d'éléments de tuyau selon la revendication 13, **caractérisé en ce que** D' désigne une distance entre le point d'extrémité proximal (1211) et le point d'extrémité distal (1212), dans lequel une déformation de chacune des surfaces de mise en prise (121) se traduit par la variation de D', dans lequel sa plage de variation est de 14% à 22%.

17. Ensemble d'éléments de tuyau selon la revendication 13, **caractérisé en ce que** chacune des surfaces de mise en prise (121) de la première unité de couplage (10A) et de la troisième unité de couplage (10C) définit une courbe de spirale logarithmique ayant une équation de ρ = e^{θ}, où θ a une plage de 60° à 200°, où ρₐ désigne le rayon de courbure de la surface de mise en prise (121) de la deuxième unité de couplage (10B), ρ_{b} désigne le rayon de courbure de la surface de mise en prise (121) de la deuxième unité de couplage (10B), ρ_{A} désigne le rayon de courbure de chacune des surfaces de mise en prise (121) des première et troisième unités de couplage (10A, 10C), ρ_{B} désigne le rayon de courbure de chacune des surfaces de mise en prise (121) des première et troisième unités de couplage (10A, 10C), D1 désigne un diamètre de la circonférence de gorge (203) de la gorge (201), et D2 désigne un diamètre de la partie d'extrémité de couplage agrandie (202), dans lequel ρₐ = D1/2, ρ_{A} = (Sp + R')/2, ρ_{b} = D2/2+R et ρ_{B} = D2/2, où R' a une plage de valeurs de 0,3 à 1 mm.

18. Ensemble d'éléments de tuyau selon la revendication 17, **caractérisé en ce que** Da désigne une valeur d'un axe mineur de la courbe elliptique de la deuxième unité de couplage (10B), Db désigne une valeur d'un axe majeur de la courbe elliptique de la deuxième unité de couplage (10B), Sp désigne un standard de l'élément de tuyau (200), D1 désigne un diamètre de la circonférence de gorge (203) de l'élément de tuyau (200) et D2 désigne un diamètre de la partie d'extrémité de couplage agrandie (202), où Da = D1, Db = Sp + R', où R' a une plage de valeurs de 0,3 à 1 mm.

19. Ensemble d'éléments de tuyau selon la revendication 10, **caractérisé en ce que** l'élément de fixation (30) comprend un boulon (31) et un écrou (32) pour se coupler avec le boulon (31), dans lequel chacun parmi le premier élément de raccordement à pivot et le second élément de raccordement à pivot est une broche de raccordement.

20. Ensemble d'éléments de tuyau selon la revendication 1, **caractérisé en ce que** chacun des éléments de tuyau (200) a une partie d'extrémité de couplage agrandie (202), dans lequel le au moins un joint (40) comprend une pluralité de saillies (432) espacées les unes des autres, qui est configuré pour être comprimé entre les deux parties d'extrémité de couplage agrandies (202) des deux éléments de tuyau (200).

21. Ensemble d'éléments de tuyau selon la revendication 1, **caractérisé en ce que** le au moins un joint (40) comprend un corps de base (41), deux éléments de sollicitation (42) étendus, de manière solidaire, à partir du corps de base (41), et un élément de retenue (43) étendu, de manière solidaire, à partir d'une partie centrale du corps de base (41), dans lequel l'élément de retenue (43) comprend un corps de retenue (431) et une pluralité de saillies (432) étendues, de manière solidaire, à partir du corps de retenue (431) et espacées les unes des autres, dans lequel chacun des éléments de sollicitation (42) comprend une partie d'extension (421) étendue, de manière solidaire, à partir du corps de base (41) et une partie de sollicitation (422) étendue vers l'intérieur et de manière inclinée à partir de la partie d'extension (421).

22. Procédé de couplage pour coupler l'ensemble d'éléments de tuyau selon l'une quelconque des revendications 1 à 21, dans lequel les deux éléments de tuyau (200) sont couplés par la pièce de couplage d'élément de tuyau (100), lequel procédé de couplage comprend les étapes consistant à :
(a) recevoir une partie d'extrémité de couplage agrandie (202) des deux éléments de tuyau (200) dans deux parties d'extrémité de raccordement de la pièce de couplage d'éléments de tuyau (100) et aligner des clavettes de mise en prise (12) des deux unités de couplage (10) ou plus de la pièce de couplage d'éléments de tuyau (100), dans lequel chacune des surfaces de mise en prise (121) des clavettes de mise en prise (12) a un rayon de courbure ; et
(b) déformer les surfaces de mise en prise (121) des clavettes de mise en prise (12) pour augmenter la zone de contact autour des gorges (201) correspondantes des éléments de tuyau (200) et les surfaces de mise en prise (121), afin de retenir les clavettes de mise en prise (12) dans les gorges (201) correspondantes des éléments de tuyau (200).

23. Procédé de couplage selon la revendication 22, **caractérisé en ce que** les surfaces de mise en prise (121) définissent des courbes avec des rayons de courbure différents, dans lequel chacune des courbes est sélectionnée dans un groupe comprenant une ou une combinaison d'une courbe de spirale logarithmique, une courbe de spirale d'Archimède, une courbe de spirale de Pascal, une courbe elliptique et une courbe de puissance élevée.
